# EUROPEAN PATENT APPLICATION

(11) **EP 4 061 051 A1**
(43) Date of publication of application: **21.09.2022**
(21) Application number: 19955950.1
(22) Date of filing: 10.12.2019
(51) Int. Cl.: H04W 28/24

(54) **DATA TRANSMISSION METHOD AND APPARATUS**

(71) Applicant: Huawei Technologies Co., Ltd., Shenzhen, Guangdong 518129 (CN)
(72) Inventor: FAN, Qiang, Shenzhen, Guangdong 518129 (CN); HUANG, Qufang, Shenzhen, Guangdong 518129 (CN); LOU, Chong, Shenzhen, Guangdong 518129 (CN)
(74) Representative: Gill Jennings & Every LLP
(86) International application number: PCT/CN2019/124396
(87) International publication number: WO 2021/114107

(57) **Abstract**

This application discloses a data transmission method and an apparatus. The method includes: A first communication apparatus obtains a data packet, and a first QoS parameter and a second QoS parameter that correspond to the data packet, maps the data packet to a DRB or an RLC layer entity based on the first QoS parameter and the second QoS parameter, and sends the data packet to a second communication apparatus. Compared with an existing solution in which a QFI corresponding to a first data packet is determined based on a 5-tuple of the first data packet and then the first data packet is mapped to a DRB based on the QFI, in the foregoing solution, because the first communication apparatus maps a first data packet to a DRB or an RLC layer entity based on two QoS parameters, a quality of service requirement of the first data packet is considered more comprehensively, so that distinguishing processing can be performed on data more effectively, to satisfy different requirements of users.

## Description

### TECHNICAL FIELD

This application relates to the field of wireless communication technologies, and in particular, to a data transmission method and an apparatus.

### BACKGROUND

In a mobile communication network, an operator can provide a richer variety of services such as voice, data, and video services for a user. Because different services have different requirements on delay, bandwidth, and the like, a quality of service (quality of service, QoS) solution is introduced to implement differentiation of various services, provide assurance for a high-speed data service, and enhance user network experience. An objective of the QoS solution is to provide network services with different quality of service to satisfy different service requirements. Especially, when network congestion occurs, quality of service of a high-priority user or service is preferentially ensured.

When generating an uplink service flow, a terminal device analyzes an uplink data packet of the uplink service flow to obtain a 5-tuple of the data packet, determines, based on a mapping relationship between a 5-tuple and a quality of service flow identifier (QoS flow indicator, QFI), a QFI corresponding to the 5-tuple, and carries the QFI corresponding to the 5-tuple in an encapsulation header of the data packet, so that the uplink service flow can be mapped to a QoS flow. When a downlink service flow is generated, a user plane network element may map the downlink service flow to a QoS flow in a same manner as that on a side of the terminal device.

In a protocol data unit (protocol data unit, PDU) session, user plane data with a same QFI is treated in a same manner, for example, scheduling or forwarding control. However, in some new service scenarios, for example, in a social live video streaming (social live video streaming, SLVS) scenario, a same video may have both a real-time viewing audience (requiring a sensitive delay) and a delayed viewing audience. However, because QFIs corresponding to video data are the same, the video data is mapped to a same QoS flow. Consequently, distinguishing processing cannot be performed on the video data, and experience of users having different requirements is affected.

### SUMMARY

In view of this, this application provides a data transmission method and an apparatus, to implement distinguishing processing on data, and satisfy different requirements of users.

According to a first aspect, an embodiment of this application provides a data transmission method. The method may be applied to a first communication apparatus, and the first communication apparatus may be a terminal device (or a chip disposed in the terminal device) or a network device (or a chip disposed in the network device). In the method, the first communication apparatus obtains a data packet, and a first QoS parameter and a second QoS parameter that correspond to the data packet, maps the data packet to a DRB or an RLC layer entity based on the first QoS parameter and the second QoS parameter, and sends the data packet to a second communication apparatus.

Compared with an existing solution in which a QFI corresponding to a first data packet is determined based on a 5-tuple of the first data packet and then the first data packet is mapped to a DRB based on the QFI, in the foregoing solution, because the first communication apparatus maps a first data packet to a DRB or an RLC layer entity based on two QoS parameters, a quality of service requirement of the first data packet is considered more comprehensively, so that distinguishing processing can be performed on data more effectively, to satisfy different requirements of users.

In a possible design, the first QoS parameter or information used to indicate the first QoS parameter is carried in the data packet.

In a possible design, the first communication apparatus is a terminal device, and the first QoS parameter is allocated to the data packet by an application layer of the first communication apparatus.

In a possible design, the first communication apparatus is a network device. That the first communication apparatus obtains a data packet and a first QoS parameter corresponding to the data packet includes: The first communication apparatus receives a GTP-U data packet from a core network device, where the GTP-U data packet includes the data packet and indication information, and the indication information is used to indicate the first QoS parameter.

In a possible design, that the first communication apparatus maps the data packet to a DRB based on the first QoS parameter and the second QoS parameter includes: The first communication apparatus obtains a correspondence between the first QoS parameter, the second QoS parameter, and a DRB. The first communication apparatus maps, based on the correspondence, the data packet to the DRB corresponding to the first QoS parameter and the second QoS parameter.

In a possible design, the first communication apparatus is a terminal device. That the first communication apparatus obtains a correspondence includes: The first communication apparatus obtains the correspondence from a network device, where the correspondence is carried in RRC signaling.

In a possible design, the first communication apparatus is a terminal device. The method further includes: If determining that the correspondence does not exist, the first communication apparatus maps the data packet to a default DRB.

In a possible design, the default DRB is configured by a network device, or is a DRB with a smallest or largest DRB ID in one or more DRBs associated with the second QoS parameter.

In a possible design, the first communication apparatus is a terminal device. The method further includes: If determining that the correspondence does not exist, the first communication apparatus sends a first request message to the network device, where the first request message includes the first QoS parameter and the second QoS parameter.

In a possible design, the method further includes: The first communication apparatus receives a first response message from the network device, where the first response message is used to indicate the DRB corresponding to the first QoS parameter and the second QoS parameter. That the first communication apparatus maps the data packet to a DRB based on the first QoS parameter and the second QoS parameter includes: The first communication apparatus maps, based on the first response message, the data packet to the DRB corresponding to the first QoS parameter and the second QoS parameter.

According to the foregoing solution, the network device may configure a DRB for the terminal device based on a request message of the terminal device, to avoid signaling overheads and maintenance complexity of the terminal device that are caused when a large quantity of DRBs are configured for the terminal device at the beginning.

In a possible design, the first QoS parameter or the information used to indicate the first QoS parameter is carried in an SDAP header or a PDCP header of the data packet.

In a possible design, that the first communication apparatus maps the data packet to a DRB based on the first QoS parameter and the second QoS parameter includes: The first communication apparatus determines, based on the first QoS parameter, the second QoS parameter corresponding to the data packet. The first communication apparatus maps, based on a correspondence between the second QoS parameter and a DRB, the data packet to the DRB corresponding to the second QoS parameter.

In a possible design, the method further includes: The first communication apparatus obtains a correspondence between the first QoS parameter and the second QoS parameter from the core network device.

In a possible design, that the first communication apparatus maps the data packet to an RLC layer entity based on the first QoS parameter and the second QoS parameter includes: The first communication apparatus maps, based on the second QoS parameter, the data packet to the DRB corresponding to the second QoS parameter, where a packet data convergence protocol PDCP layer entity corresponding to the DRB is associated with at least one RLC layer entity. The first communication apparatus obtains a correspondence between the first QoS parameter and an RLC layer entity, and maps, based on the correspondence, the data packet to the RLC layer entity that corresponds to the first QoS parameter and that is in the at least one RLC layer entity.

In a possible design, the first communication apparatus is a terminal device. That the first communication apparatus obtains a correspondence between the first QoS parameter and an RLC layer entity includes: The first communication apparatus obtains the correspondence from a network device, where the correspondence is carried in RRC signaling.

In a possible design, the first communication apparatus is a terminal device. The method further includes: If determining that the correspondence does not exist, the first communication apparatus maps the data packet to a default RLC layer entity.

In a possible design, the default RLC layer entity is configured by the network device, or is an RLC layer entity that corresponds to a smallest or largest logical channel LCH ID and that is in the at least one RLC layer entity.

In a possible design, the first communication apparatus is a terminal device. The method further includes: If determining that the correspondence does not exist, the first communication apparatus sends a second request message to the network device, where the second request message includes the first QoS parameter.

In a possible design, the method further includes: The first communication apparatus receives a second response message from the network device, where the second response message is used to indicate the RLC layer entity corresponding to the first QoS parameter. The first communication apparatus maps, based on the second response message, the data packet to the RLC layer entity corresponding to the first QoS parameter.

According to the foregoing solution, the network device may configure an RLC layer entity for the terminal device based on a request message of the terminal device, to avoid signaling overheads and maintenance complexity of the terminal device that are caused when a large quantity of RLC layer entities are configured for the terminal device at the beginning.

In a possible design, the PDCP layer entity is configured with a plurality of groups of parameters, and the first QoS parameter corresponds to one group of the plurality of groups of parameters. The method further includes: The first communication apparatus processes the data packet based on the group of parameters corresponding to the first QoS parameter.

According to the foregoing solution, a plurality of groups of parameters are configured for the PDCP layer entity, so that the data packet can be processed based on the first QoS parameter corresponding to the data packet by using the corresponding parameter. In this way, distinguishing processing on data packets is implemented.

In a possible design, the PDCP layer entity is associated with a plurality of RLC layer entities, the first QoS parameter corresponds to at least two of the plurality of RLC layer entities, and the at least two RLC layer entities are configured to implement a duplication transmission function. That the first communication apparatus maps the data packet to an RLC layer entity based on the first QoS parameter and the second QoS parameter includes: The first communication apparatus receives indication information from the second communication apparatus, where the indication information is used to indicate an RLC layer entity that is configured to execute the duplication transmission function and that is in the at least two RLC layer entities corresponding to the first QoS parameter. The first communication apparatus maps the data packet to the RLC layer entity configured to execute the duplication transmission function.

According to the foregoing solution, the network device may indicate the RLC layer entity configured to execute the duplication transmission function, to improve flexibility of regulation and control by the network device.

In a possible design, the first QoS parameter or the information used to indicate the first QoS parameter is carried in an SDAP header, a PDCP header, or an RLC header of the data packet.

According to a second aspect, an embodiment of this application provides a data transmission method. The method may be applied to a network device (or a chip disposed in the network device). In the method, the network device obtains a data packet, and a first QoS parameter and a second QoS parameter that correspond to the data packet, and sends a GTP-U data packet to a core network device, where the GTP-U data packet includes the data packet and indication information, and the indication information is used to indicate the first QoS parameter and the second QoS parameter.

According to the foregoing solution, because the GTP-U data packet includes a second data packet and the indication information, the second data packet can be subsequently scheduled based on the first QoS parameter and the second QoS parameter. In this way, distinguishing processing on data packets is implemented at a finer granularity in an end-to-end manner.

In a possible design, obtaining a data packet, and a first QoS parameter and a second QoS parameter that correspond to the data packet includes: receiving the data packet from a terminal device, where the data packet is carried on a first DRB or a first RLC layer entity, and obtaining the first QoS parameter based on the first DRB or the first RLC layer entity; or receiving the data packet from a terminal device, where the data packet carries the first QoS parameter or information used to indicate the first QoS parameter.

In a possible design, that the data packet carries the first QoS parameter or information used to indicate the first QoS parameter includes: an SDAP header, a PDCP header, or an RLC header of the data packet carries the first QoS parameter or the information used to indicate the first QoS parameter.

In a possible design, the indication information is carried in a GTP-U header of the GTP-U data packet.

According to a third aspect, an embodiment of this application provides a communication system. The communications system includes a network device and a core network device. The network device is configured to: obtain a data packet, and a first QoS parameter and a second QoS parameter that correspond to the data packet, and send a GTP-U data packet to the core network device, where the GTP-U data packet includes the data packet and indication information, and the indication information is used to indicate the first QoS parameter and the second QoS parameter. The core network device is configured to receive the GTP-U data packet.

In a possible design, the communication system further includes a terminal device, configured to send the data packet to the network device, where the data packet is carried on a first DRB or a first RLC layer entity, and the first DRB or the first RLC layer entity corresponds to the first QoS parameter; or the data packet carries the first QoS parameter or information used to indicate the first QoS parameter.

In a possible design, the core network device is further configured to send an internet IP data packet, where the IP data packet includes the data packet and the indication information.

According to a fourth aspect, this application provides a communication apparatus. The communication apparatus may be a terminal device (or a chip disposed in the terminal device) or a network device (or a chip disposed in the network device). The communication apparatus has a function for implementing the first aspect or the second aspect. For example, the communication apparatus includes modules, units, or means (means) corresponding to performing the steps in the first aspect or the second aspect, and the functions, the units, or the means may be implemented by software or hardware, or may be implemented by hardware executing corresponding software.

In a possible design, the communication apparatus includes a processing unit and a communication unit. The communication unit may be configured to send and receive a signal, to implement communication between the communication apparatus and another apparatus. The processing unit may be configured to perform some internal operations of the communication apparatus. Functions performed by the processing unit and the communication unit may correspond to the steps in the first aspect or the second aspect.

In a possible design, the communication apparatus includes a processor, and may further include a transceiver. The transceiver is configured to receive and send a signal, and the processor executes program instructions, to complete the method in any one of the possible designs or implementations of the first aspect or the second aspect. The communication apparatus may further include one or more memories, and the memory is configured to be coupled to the processor. The one or more memories may be integrated with the processor, or may be disposed independent of the processor. This is not limited in this application. The memory may store a necessary computer program or necessary instructions to implement the functions in the first aspect or the second aspect. The processor may execute the computer program or the instructions stored in the memory. When the computer program or the instructions are executed, the communication apparatus is enabled to implement the method in any one of the possible designs or implementations of the first aspect or the second aspect.

In a possible design, the communication apparatus includes a processor and a memory. The memory may store a necessary computer program or necessary instructions to implement the functions in the first aspect or the second aspect. The processor may execute the computer program or the instructions stored in the memory. When the computer program or the instructions are executed, the communication apparatus is enabled to implement the method in any one of the possible designs or implementations of the first aspect or the second aspect.

In a possible design, the communication apparatus includes at least one processor and an interface circuit. The at least one processor is configured to: communicate with another apparatus via the interface circuit, and perform the method performed by the terminal device in any one of the possible designs or implementations of the first aspect or the second aspect.

According to a fifth aspect, this application provides a computer-readable storage medium. The computer storage medium stores computer-readable instructions; and when a computer reads and executes the computer-readable instructions, the computer is enabled to perform the method in any one of the possible designs of the first aspect or the second aspect.

According to a sixth aspect, this application provides a computer program product; and when a computer reads and executes the computer program product, the computer is enabled to perform the method in any one of the possible designs of the first aspect or the second aspect.

According to a seventh aspect, this application provides a chip. The chip includes a processor, and the processor is coupled to a memory, and is configured to read and execute a software program stored in the memory, to implement the method in any one of the possible designs of the first aspect or the second aspect.

These aspects or other aspects of this application are more readily apparent from the following description of embodiments.

### BRIEF DESCRIPTION OF DRAWINGS

FIG. 1a is a schematic diagram of a network architecture to which an embodiment of this application is applicable;
FIG. 1b is a schematic diagram of another network architecture to which an embodiment of this application is applicable;
FIG. 1c is a schematic diagram of another network architecture to which an embodiment of this application is applicable;
FIG. Id is a schematic diagram of another network architecture to which an embodiment of this application is applicable;
FIG. 2a is a schematic diagram of downlink data transmission between layers according to an embodiment of this application;
FIG. 2b is a schematic diagram of a QoS model according to an embodiment of this application;
FIG. 2c is a schematic diagram of a possible SLVS platform architecture according to an embodiment of this application;
FIG. 2d is a schematic diagram of duplication transmission of data according to an embodiment of this application;
FIG. 3 is a schematic flowchart corresponding to a data transmission method according to Embodiment 1 of this application;
FIG. 4a is a schematic flowchart corresponding to Implementation 1 according to Embodiment 1 of this application;
FIG. 4b is a schematic flowchart corresponding to Implementation 2 according to Embodiment 1 of this application;
FIG. 4c is a schematic flowchart corresponding to Implementation 3 according to Embodiment 1 of this application;
FIG. 5a is a schematic flowchart corresponding to a data transmission method according to Embodiment 2 of this application;
FIG. 5b is a schematic diagram of a data transmission process according to Embodiment 2 of this application;
FIG. 6a is a schematic flowchart corresponding to a data transmission method according to Embodiment 3 of this application;
FIG. 6b is a schematic diagram of a data transmission process according to Embodiment 3 of this application;
FIG. 7 is a possible example block diagram of an apparatus according to an embodiment of this application;
FIG. 8 is a schematic diagram of a structure of a terminal device according to an embodiment of this application; and
FIG. 9 is a schematic diagram of a structure of a network device according to an embodiment of this application.

### DESCRIPTION OF EMBODIMENTS

The following describes technical solutions in embodiments of the present invention with reference to the accompanying drawings in embodiments of the present invention. It is clear that, the described embodiments are merely some rather than all of embodiments of the present invention.

First, the following describes some terms in embodiments of this application, to facilitate understanding of a person skilled in the art.
(1) A terminal device may be a wireless terminal device that can receive scheduling information and indication information of a network device. The wireless terminal device may be a device that provides voice and/or data connectivity for a user, a handheld device with a wireless connection function, or another processing device connected to a wireless modem. The terminal device may communicate with one or more core networks or the internet by using a radio access network (radio access network, RAN). The terminal device may be a mobile terminal device, for example, a mobile phone (or referred to as a "cellular" phone, a mobile phone (mobile phone)), a computer, or a data card, for example, may be a portable, pocket-sized, handheld, computer built-in, or in-vehicle mobile apparatus that exchanges voice and/or data with the radio access network. For example, the terminal device may be a device such as a personal communications service (personal communications service, PCS) phone, a cordless phone, a session initiation protocol (session initiation protocol, SIP) phone, a wireless local loop (wireless local loop, WLL) station, a personal digital assistant (personal digital assistant, PDA), a tablet (Pad), or a computer with a wireless transceiver function. The wireless terminal device may alternatively be referred to as a system, a subscriber unit (subscriber unit), a subscriber station (subscriber station), a mobile station (mobile station, MS), a remote station (remote station), an access point (access point, AP), a remote terminal (remote terminal) device, an access terminal (access terminal) device, a user terminal (user terminal) device, a user agent (user agent), a subscriber station (subscriber station, SS), customer premises equipment (customer premises equipment, CPE), a terminal (terminal), user equipment (user equipment, UE), a mobile terminal (mobile terminal, MT), or the like. Alternatively, the terminal device may be a wearable device, a terminal device in a next-generation communication system, for example, a 5G communication system, or a terminal device in a future evolved public land mobile network (public land mobile network, PLMN).
(2) A network device is a device in a wireless network. For example, the network device may be a radio access network (radio access network, RAN) node (or device) that connects a terminal to the wireless network, or may be referred to as a base station. Currently, examples of some RAN devices are: a next generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), a road side unit (road side unit, RSU), an access point in an integrated access and backhaul (integrated access and backhaul, IAB) system, a control node and a terminal node in a TSN network, and the like. In addition, in a network structure, the network device may include a centralized unit (centralized unit, CU) node, a distributed unit (distributed unit, DU) node, or a RAN device that includes the CU node and the DU node. In addition, in another possible case, the network device may be another apparatus that provides a wireless communication function for the terminal device. A specific technology and a specific device form used by the network device are not limited in embodiments of this application. For ease of description, in embodiments of this application, an apparatus that provides the wireless communication function for the terminal device is referred to as the network device.
(3) The terms "system" and "network" may be used interchangeably in embodiments of this application. The term "at least one" means one or more, and the term "a plurality of' means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one item (piece) of the following" or a similar expression thereof means any combination of the items, including any combination of singular items (pieces) or plural items (pieces). For example, "at least one of A, B, and C" includes A, B, C, AB, AC, BC, or ABC.

In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects. For example, a first terminal device and a second terminal device are merely used to distinguish between different terminal devices, but do not indicate different priorities, importance, or the like of the two terminal devices.

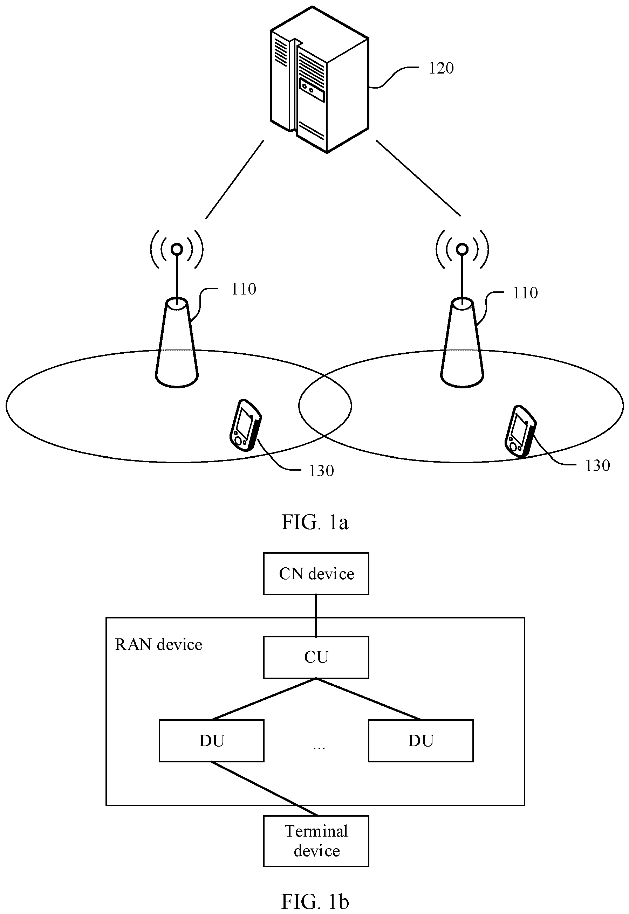

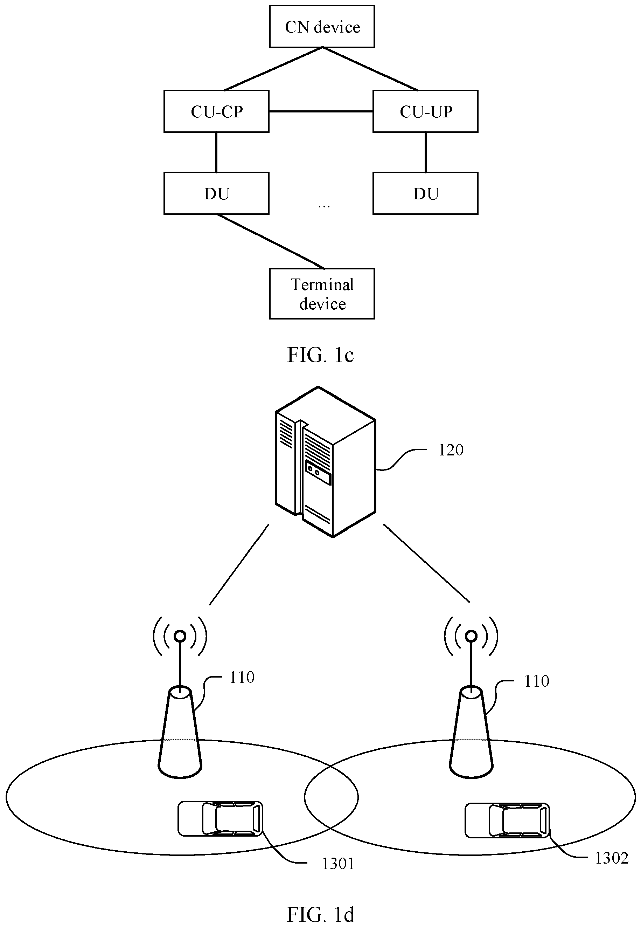

FIG. 1a is a schematic diagram of a network architecture to which an embodiment of this application is applicable. As shown in FIG. 1a, a terminal device 130 may access a wireless network, to obtain a service of an external network (for example, the internet) by using the wireless network, or communicate with another device by using the wireless network, for example, may communicate with another terminal device. The wireless network includes a radio access network (radio access network, RAN) device 110 and a core network (core network, CN) device 120. The RAN device 110 is configured to connect the terminal device 130 to the wireless network, and the CN device 120 is configured to manage the terminal device and provide a gateway for communicating with the external network. It should be understood that a quantity of devices in a communication system shown in FIG. 1a is merely used as an example, and this embodiment of this application is not limited thereto. During actual application, the communication system may further include more terminal devices 130 and more RAN devices 110, or may include another device.

A CN may include a plurality of CN devices 120. When the network architecture shown in FIG. 1a is applicable to a 5G communication system, the CN device 120 may be an access and mobility management function (access and mobility management function, AMF) entity, a session management function (session management function, SMF) entity, a user plane function (user plane function, UPF) entity, or the like. In this embodiment of this application, an example in which the CN device 120 is the UPF entity is used. For example, an interface between the terminal device 130 and the RAN device 110 may be referred to as a Uu interface or air interface, and an interface between the RAN device 110 and the UPF entity may be referred to as an N3 interface.

FIG. 1b is a schematic diagram of another network architecture to which an embodiment of this application is applicable. As shown in FIG. 1b, the network architecture includes a CN device, a RAN device, and a terminal device. The RAN device includes a baseband apparatus and a radio frequency apparatus. The baseband apparatus may be implemented by one node, or may be implemented by a plurality of nodes. The radio frequency apparatus may be independently and remotely implemented from the baseband apparatus, or may be integrated into the baseband apparatus, or a part of the radio frequency apparatus is implemented remotely from the baseband apparatus and a remaining part is integrated into the baseband apparatus. For example, in an LTE communication system, the RAN device (eNB) includes a baseband apparatus and a radio frequency apparatus. The radio frequency apparatus may be remotely disposed relative to the baseband apparatus. For example, a remote radio unit (remote radio unit, RRU) is remotely disposed relative to a BBU. For another example, in an evolved structure, the RAN device may include a CU and a DU, a plurality of DUs may be controlled by one CU in a centralized manner, and an interface between the CU and the DU may be referred to as an F1-U interface.

FIG. 1c is a schematic diagram of another network architecture to which an embodiment of this application is applicable. Compared with the network architecture shown in FIG. 1b, in FIG. 1c, a control plane (CP) and a user plane (UP) of a CU may further be split and implemented by dividing into different entities, which are respectively a control plane (control plane, CP)-CU entity (namely, a CU-CP entity) and a user plane (user plane, UP)-CU entity (namely, a CU-UP entity).

In the foregoing network architecture, signaling generated by the CU may be sent to a terminal device through a DU, or signaling generated by the terminal device may be sent to the CU through the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling at an RRC layer or a PDCP layer is finally processed as signaling at a PHY layer and sent to the terminal device, or is converted from received signaling at the PHY layer. In the architecture, it may also be considered that the signaling at the RRC layer or the PDCP layer is sent by the DU, or sent by the DU and a radio frequency apparatus.

FIG. Id is a schematic diagram of another network architecture to which an embodiment of this application is applicable. As shown in FIG. Id, the network architecture may include a RAN device 110, a CN device 120, a terminal device 1301, and a terminal device 1302. A difference between the network architecture shown in FIG. Id and the network architecture shown in FIG. 1a lies in that the terminal device 1301 and the terminal device 1302 in FIG. Id may communicate with each other by using a sidelink (sidelink) resource. For example, the terminal device 1301 may send a data packet to the terminal device 1302.

The network architecture shown in FIG. 1a, FIG. 1b, FIG. 1c, or FIG. Id is applicable to communication systems of various radio access technologies (radio access technologies, RATs). For example, the communication system may be a 5G (or referred to as a new radio (new radio, NR)) communication system, or certainly be a future communication system. The network architectures and service scenarios described in embodiments of this application are intended to describe the technical solutions in embodiments of this application more clearly, and do not constitute a limitation on the technical solutions provided in embodiments of this application. A person of ordinary skill in the art may know that: With evolution of the communication network architecture and emergence of new service scenarios, the technical solutions provided in embodiments of this application are also applicable to similar technical problems.

An apparatus in the following embodiments of this application may be located in a terminal device or a network device based on a function implemented by the apparatus. When the foregoing CU-DU structure is used, the network device may be a CU node, a DU node, or a RAN device including the CU node and the DU node.

In the network architecture shown in FIG. 1a, FIG. 1b, FIG. 1c, or FIG. Id, communication between the network device and the UPF entity may comply with a specific protocol, for example, a GTP-U protocol. The GTP-U protocol is one protocol of a general packet radio service (general packet radio service, GPRS) tunneling protocol (GPRS tunneling protocol, GTP).

Communication between the network device and the terminal device may comply with a specific protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (physical layer, PHY). A user plane protocol layer structure may include the functions of the protocol layers such as the PDCP layer, the RLC layer, the MAC layer, and the physical layer. In a possible implementation, a service data adaptation protocol (service data adaptation protocol, SDAP) layer may be further included above the PDCP layer. For example, the network device may implement the functions of the protocol layers such as the RRC layer, the PDCP layer, the RLC layer, and the MAC layer through one node or a plurality of nodes. For example, if the network device includes a CU and a DU, the CU and the DU may be divided based on a protocol layer of a wireless network. For example, functions of the PDCP layer and a protocol layer above the PDCP layer are set in the CU, and functions of protocol layers below the PDCP layer, such as the RLC layer and the MAC layer, are set in the DU. Division based on the protocol layer is merely an example, and division may alternatively be performed based on another protocol layer. For example, division is performed based on the RLC layer. Functions of the RLC layer and a protocol layer above the RLC layer are set in the CU, and a function of a protocol layer below the RLC layer is set in the DU. Alternatively, division is performed based on a protocol layer. For example, some functions of the RLC layer and a function of a protocol layer above the RLC layer are set in the CU, and remaining functions of the RLC layer and a function of a protocol layer below the RLC layer are set in the DU. In addition, division may alternatively be performed in another manner. For example, the division is performed based on a delay. A function whose processing time needs to satisfy a delay requirement is set in the DU, and a function whose processing time does not need to satisfy the delay requirement is set in the CU.

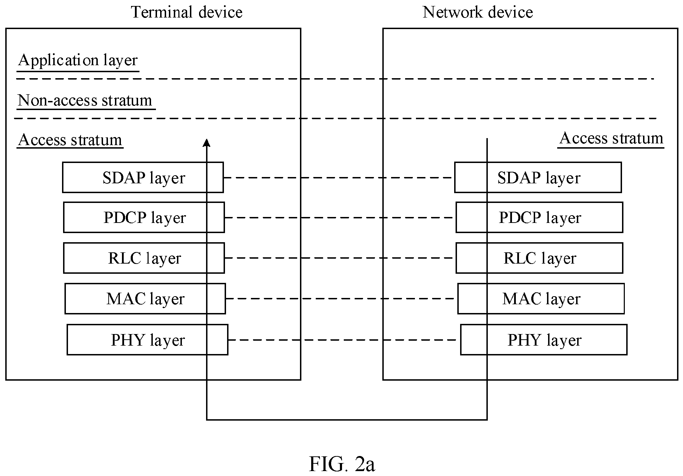

Data transmission between the network device and the terminal device is used as an example. Data transmission needs to pass through a user plane protocol layer, for example, the SDAP layer, the PDCP layer, the RLC layer, the MAC layer, or the physical layer. The SDAP layer, the PDCP layer, the RLC layer, the MAC layer, and the physical layer may also be collectively referred to as an access stratum. Because a data transmission direction is divided into sending and receiving, each layer is further divided into a sending part and a receiving part. The following uses data transmission as an example. FIG. 2a is a schematic diagram of downlink data transmission between layers. In FIG. 2a, a downward arrow represents data sending, and an upward arrow represents data receiving. After obtaining data from an upper layer, a PDCP layer transmits the data to an RLC layer and a MAC layer, the MAC layer generates a transport block, and then wireless transmission is performed through a physical layer. Data is correspondingly encapsulated at each layer. Data received by a layer from an upper layer of the layer is considered as a service data unit (service data unit, SDU) of the layer. After being encapsulated at the layer, the data becomes a PDU, and is then transferred to a next layer. For example, data received by the PDCP layer from an upper layer is referred to as a PDCP SDU, and data sent by the PDCP layer to a lower layer is referred to as a PDCP PDU. Data received by the RLC layer from an upper layer is referred to as an RLC SDU, and data sent by the RLC layer to a lower layer is referred to as an RLC PDU. In protocols, the layers correspond to each other in a form of channels. The RLC layer corresponds to the MAC layer through a logical channel (logical channel, LCH), the MAC layer corresponds to the physical layer through a transport channel (transport channel), and the physical layer corresponds to a physical layer at another end through a physical channel (physical channel).

For example, it can be further learned from FIG. 2a that, a terminal device further has an application layer and a non-access stratum. The application layer may be configured to provide a service for an application program installed on the terminal device. For example, downlink data received by the terminal device may be sequentially transmitted from the physical layer to the application layer, and then the application layer provides the downlink data for the application program. For another example, the application layer may obtain data (for example, a video recorded by a user by using the application program) generated by the application program, sequentially transmit the data to the physical layer, and send the data to another communication apparatus. The non-access stratum may be configured to: forward user data, for example, forward uplink data received from the application layer to an SDAP layer or forward downlink data received from the SDAP layer to the application layer; and identify QFIs of data packets in an uplink direction and a downlink direction (refer to the following descriptions). For example, the QFIs of the data packets in the uplink direction and the downlink direction are determined based on a mapping relationship between a 5-tuple and a QFI.

Based on the communication protocol and the protocol layer structure that are described above, the following describes some possible data transmission processes in the network architecture shown in FIG. 1a, FIG. 1b, or FIG. 1c.

The network architecture shown in FIG. 1a is used as an example. The UPF entity may send a downlink data packet to the terminal device 130. For example, the UPF entity obtains a data packet X, encapsulates the data packet X by using a GTP-U protocol (where the GTP-U protocol is one protocol of a general packet radio service (general packet radio service, GPRS) tunneling protocol (GPRS tunneling protocol, GTP)) to obtain a GTP-U protocol data unit (protocol data unit, PDU), and then sends the GTP-U PDU to a CU through the N3 interface, where the GTP-U PDU includes the data packet X. The CU receives the GTP-U PDU, obtains the data packet X, encapsulates the data packet X into a PDCP PDU, and delivers the PDCP PDU to a DU through an F1-U interface. The DU receives the PDCP PDU, obtains the data packet X, encapsulates the data packet X into a MAC PDU, and sends the MAC PDU to the terminal device through the Uu interface.

Correspondingly, the terminal device 130 may send an uplink data packet to the UPF entity. For example, the terminal device obtains a data packet Y, encapsulates the data packet Y into a MAC PDU, and sends the MAC PDU to the DU through the Uu interface. The DU receives the data packet Y, encapsulates the data packet Y into a PDCP PDU, and delivers the PDCP PDU to the CU through the F1-U interface. The CU receives the PDCP PDU, obtains the data packet Y, encapsulates the data packet Y into a GTP-U PDU, and sends the GTP-U PDU to the UPF entity.

In the network architecture shown in FIG. Id, data may be transmitted between a first terminal device (for example, the terminal device 1301) and a second terminal device (for example, the terminal device 1302). For example, the first terminal device obtains a data packet Z, and sends the data packet Z to the second terminal device through a sidelink.

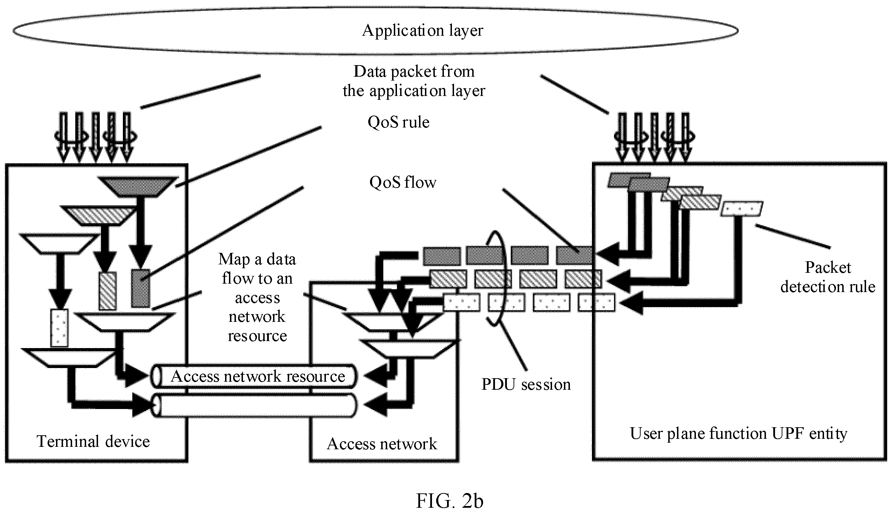

When the network architecture shown in FIG. 1a, FIG. 1b, FIG. 1c, or FIG. Id is applicable to a 5G communication system (which may be referred to as 5GS (5G system) for short), data transmission between different communication apparatuses described above may be implemented based on a QoS model in 5GS. FIG. 2b is a schematic diagram of a QoS model.

As shown in FIG. 2b, in a downlink direction, data packets entering 5GS are distinguished at a UPF entity. For example, the UPF entity distinguishes, based on a packet filter set (packet filter set) in a downlink packet detection rule (packet detection rule, PDR), downlink data packets and allocates the downlink data packets to different QoS flows. All data packets in a same QoS flow are marked with a same QFI. The UPF entity transfers the data packets to a network device on an access network (access network, AN) side through an N3 interface. The network device maps a QoS flow to a DRB, and then transmits downlink data on a Uu interface. In an uplink direction, after generating data packets, an application layer of a terminal device distinguishes, based on a packet filter set in a QoS rule (rule) configured by an SMF entity, uplink data packets and allocates the uplink data packets to different QoS flows. An SDAP layer entity of the terminal device maps a data packet of a QoS flow to a corresponding DRB based on a mapping relationship that is between a QFI and a DRB and that is configured by a base station, and then transmits uplink data on an air interface. For example, one QoS flow can be mapped only to one DRB, and different QoS flows may be mapped to a same DRB. A mapping relationship between a QoS flow and a DRB may be determined by the network device on the AN side.

The packet filter sets in the QoS rule and the PDR are used to identify one or more data packet flows (for example, internet protocol (internet protocol, IP) flows), and the packet filter sets may each include one or more packet filter templates. Currently, 5GS defines two types of packet filter sets, namely, an IP packet filter set and an Ethernet (Ethernet) packet filter set, based on a PDU session type. When the PDU session type is IP, the packet filter set supports any combination of the following packet filter templates: a source/destination IP address or IPv6 prefix, a source/destination port number, a protocol identifier of a protocol above an IP layer, a type of service (type of service, TOS) field of IPv4/ traffic category and mask of IPv6, an IPv6 flow label, a security parameter index, and a packet filter direction. A common packet filter template is a combination of the first three elements. To be specific, data packets are filtered based on 5-tuples (source/destination addresses, source/destination port numbers, and transport layer protocols) of the IP data packets. In embodiments of the present invention, an example in which the 5-tuple of the IP data packet is used as a packet filter template is used. In specific embodiments, any combination of the foregoing elements may be used as a packet filter template.

It can be learned from the foregoing description that, when the QoS model shown in FIG. 2b is used, if different data packets have a same 5-tuple, the data packets are marked with a same QFI, and are mapped to a same QoS flow. Further, on a core network side, data packets marked with a same QFI are subject to same forwarding and scheduling treatment. On an air interface side, a DRB is a logical channel for data packet transmission. A network device may perform specific configuration on the DRB, to ensure that a data packet processed and transmitted through the DRB can satisfy a QoS requirement on the air interface side. Therefore, data packets transmitted through the DRB are subject to same treatment on the air interface side. In other words, data packets in one QoS flow are always subject to same treatment in 5GS, for example, scheduling and forwarding priorities.

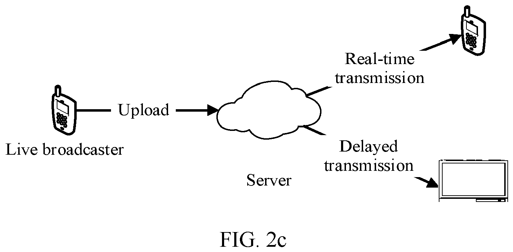

However, in some possible scenarios, for example, an SLVS scenario and a TCP data flow transmission scenario, data in a same QoS flow may have different requirements (for example, delay requirements). Specifically, for the SLVS scenario, an SLVS application may provide a data flow for both real-time viewing and delayed viewing, and this is referred to as a "time-shifted viewing" feature. Audiences of the SLVS application have a wide delay tolerance. FIG. 2c is a schematic diagram of a possible SLVS platform architecture. As shown in FIG. 2c, a live broadcaster first uploads a live video stream to a server end, and the server provides the video stream for different types of audience. For an SLVS video stream, when available bandwidth is limited, experience of a real-time audience is preferentially ensured (for example, only a delay-sensitive base layer data frame may be transmitted); when bandwidth is sufficient, an enhancement layer data frame that is outdated (outdated) for the real-time audience may be further transmitted. In this case, in a transmission process of a same video stream, both a delay-sensitive data frame and a data frame that is not delay-sensitive but has a high reliability requirement exist. For the TCP data flow transmission scenario, in a TCP data flow, timely transmission of a TCP ACK frame is beneficial to congestion control (that is, a delay requirement of the TCP ACK frame is high). Therefore, data frames of different importance also exist in a same TCP data flow.

The SLVS scenario is used as an example. When a live broadcaster uploads live video streams to the server end, 5-tuples of the live video streams are the same, and QoS assurance of data packets with a same 5-tuple is the same in 5GS. Therefore, when the live video stream has both a real-time viewing audience (delay-sensitive) and a delayed viewing audience, for a QoS flow to which the live video stream is mapped, a QoS parameter can be set only based on a requirement of the delay-sensitive user (for example, a data transmission delay is ensured, but transmission reliability is not high enough), and distinguishing processing cannot be performed on different data frames, affecting experience of the delayed viewing audience.

Based on this, embodiments of this application provide a data transmission method, to implement distinguishing processing on data, and satisfy different requirements of users.

For example, the data transmission method provided in embodiments of this application may include two possible solutions: Solution 1 and Solution 2. In Solution 1, a first communication apparatus obtains a first data packet, and a first QoS parameter and a second QoS parameter that correspond to the first data packet, maps the first data packet to a DRB or an RLC layer entity based on the first QoS parameter and the second QoS parameter, and sends the first data packet to a second communication apparatus. The second QoS parameter herein may be a QFI or a QFI'. For descriptions of the second QoS parameter, refer to the following. Compared with an existing solution in which a QFI corresponding to a first data packet is determined based on a 5-tuple of the first data packet and then the first data packet is mapped to a DRB based on the QFI, in the solution, because the first communication apparatus maps the first data packet to the DRB or the RLC layer entity based on two QoS parameters, a quality of service requirement of the first data packet is considered more comprehensively, so that distinguishing processing can be performed on data more effectively, to satisfy different requirements of users. For example, Solution 1 is applicable to the network architecture shown in FIG. 1a. The first communication apparatus may be a terminal device, and the second communication apparatus may be a network device. Alternatively, the second communication apparatus may be a terminal device, and the first communication apparatus may be a network device. Alternatively, Solution 1 is applicable to the network architecture shown in FIG. Id. The first communication apparatus may be a terminal device (for example, a first terminal device), and the second communication apparatus may be another terminal device (for example, a second terminal device). In other words, in Solution 1, the first communication apparatus may implement, based on the first QoS parameter and the second QoS parameter, distinguishing processing on data packets at a finer granularity on an air interface or a sidelink interface.

In Solution 2, a first communication apparatus obtains a second data packet, and a first QoS parameter and a second QoS parameter that correspond to the second data packet, and sends a GTP-U data packet to a second communication apparatus, where the GTP-U data packet includes the second data packet and indication information. The indication information is used to indicate the first QoS parameter and the second QoS parameter. The second QoS parameter herein may be a QFI (different from a QFI'). For example, Solution 2 is applicable to the network architecture shown in FIG. 1a. The first communication apparatus may be a network device, and the second communication apparatus may be a core network device (for example, the UPF entity). According to Solution 2, because the GTP-U data packet includes the second data packet and the indication information, the second data packet can be subsequently scheduled based on the first QoS parameter and the second QoS parameter. In this way, distinguishing processing on data packets is implemented at a finer granularity in an end-to-end manner.

The following first describes related technical features in embodiments of this application. It should be noted that these explanations are intended to make embodiments of this application easier to understand, but should not be considered as a limitation on the protection scope claimed in this application.

### (1) First QoS parameter

The first QoS parameter may be referred to as an enhanced QoS indicator (enhanced QoS indicator, eQI) or another name. This is not specifically limited.

In an example, a QoS flow is a QoS distinguishing granularity in a PDU session, and the first QoS parameter may be understood as another QoS distinguishing granularity in the PDU session. Compared with the QoS flow, a distinguishing granularity of the first QoS parameter is finer.

In an example, the first QoS parameter may be used to indicate a quality of service level, for example, indicate a quality of service level in one QoS flow, so that data packets in the QoS flow can be mapped to different DRBs or RLC layer entities; or the first QoS parameter is used as a reference information element for data packet offloading (filtering), for example, used as a consideration factor of a packet filter template. For example, the first QoS parameter is used to allocate data packets in data flows with a same 5-tuple to different QoS flows, or allocate different QFIs to the data packets.

In embodiments of this application, the first QoS parameter may include one or more bits, and different values of the one or more bits are used to indicate different quality of service levels. An indicator for determining the quality of service level may include one or more of the following QoS indicators: a priority level, a packet delay budget, a packet error rate, a default maximum burst data amount, an average window, and the like. For example, the quality of service level may be determined based on a packet delay budget reflecting a real-time requirement of a data packet and a packet error rate reflecting a transmission reliability requirement. For another example, the quality of service level may be determined based on whether a data packet is newly transmitted or retransmitted.

For example, the first QoS parameter includes two bits, and different values of the two bits may be used to indicate four different levels. For example, in a data flow generated by a same application, if a data packet in a first part has a higher real-time requirement and a higher transmission reliability requirement, a first QoS parameter corresponding to the data packet in the part may be marked as 00; if a data packet in a second part has a higher real-time requirement and a lower transmission reliability requirement, a first QoS parameter corresponding to the data packet in the part may be marked as 01; if a data packet in a third part has a lower real-time requirement and a higher transmission reliability requirement, a first QoS parameter corresponding to the data packet in the part may be marked as 10; if a data packet in a fourth part has a lower real-time requirement and a lower transmission reliability requirement, a first QoS parameter corresponding to the data packet in the part may be marked as 11.

For another example, the first QoS parameter includes one bit, and different values of the bit may be used to indicate two different levels. For example, a first QoS parameter corresponding to a data packet newly transmitted at an application layer is marked as 0, and a first QoS parameter corresponding to a data packet retransmitted at the application layer is marked as 1.

For another example, the first QoS parameter includes four bits, and different values of the four bits may be used to indicate 16 different quality of service levels. Larger values corresponding to the four bits indicate higher QoS requirements. For example, when a first QoS parameter corresponding to a data packet is 1111, it indicates that the data packet has a highest QoS requirement; when a first QoS parameter corresponding to a data packet is 0000, it indicates that the data packet has a lowest QoS requirement.

### (2) Second QoS parameter

In embodiments of this application, the second QoS parameter may be used to identify a QoS flow, so that an SDAP layer can map a data packet to a corresponding DRB based on a second QoS parameter of the data packet.

In an example (referred to as Example 1), the second QoS parameter may be a QFI, and a value range of the QFI may be [0, 256].

In a possible case of the example, the second QoS parameter may be the foregoing described QFI that has a correspondence with a packet filter template (for example, a 5-tuple). In this way, after a packet filter template of the data packet is obtained, the second QoS parameter corresponding to the data packet may be obtained based on a correspondence between a packet filter template and the second QoS parameter. For example, refer to Table 1. When a 5-tuple is used as a packet filter template, an example of a correspondence between a 5-tuple and the second QoS parameter is shown.

**Table 1: Example of the correspondence between a packet filter template and the second QoS parameter**

| Packet filter template | Second QoS parameter |
|---|---|
| 5-tuple 1 | 1 |
| 5-tuple 2 | 4 |
| 5-tuple 3 | 9 |
| 5-tuple 4 | 20 |
| \... | ... |

In another possible case of the example, the second QoS parameter may be a QFI that has a correspondence with the first QoS parameter. Optionally, another possible parameter, for example, the 5-tuple, may be further introduced into the correspondence. An example in which there is a correspondence between a 5-tuple, the first QoS parameter, and the second QoS parameter is used. Table 2 shows the example of the correspondence between a 5-tuple, the first QoS parameter, and the second QoS parameter.

**Table 2: Example of the correspondence between a 5-tuple, the first QoS parameter, and the second QoS parameter**

| 5-tuple | First QoS parameter | Second QoS parameter |
|---|---|---|
| 5-tuple 1 | 0000 | 1 |
| 5-tuple 1 | 0001 | 2 |
| 5-tuple 1 | 0002 | 3 |
| 5-tuple 2 | 0000 | 4 |
| 5-tuple 2 | 0100 | 5 |
| ... | ... | ... |

It can be learned from the foregoing Table 1 and Table 2 that, in the foregoing Table 1, the QFIs corresponding to the 5-tuples are only some of QFIs, and 5-tuples corresponding to some reserved QFIs are not set. In Table 2, the first QoS parameter is introduced, so that data packets with a same 5-tuple may correspond to different second QoS parameters due to different first QoS parameters. Compared with Table 1, in Table 2, distinguishing processing may be further performed on the data packets by using the reserved QFIs.

In embodiments of this application, for ease of distinguishing, the second QoS parameter in Table 1 is referred to as a QFI, and the second QoS parameter in Table 2 is referred to as a QFI'. In addition, the "correspondence" in embodiments of this application may alternatively be replaced with a "mapping relationship" or another word indicating a similar meaning, and the "association" may alternatively be replaced with a "correspondence" or another word indicating a similar meaning.

In another example (referred to as Example 2), the second QoS parameter may alternatively be a newly defined parameter used to identify a QoS flow, and a correspondence between the newly defined second QoS parameter, a 5-tuple, and the first QoS parameter may exist. For specific implementation, refer to a QFI'.

### (3) Duplication transmission function

At least one radio bearer (radio bearer, RB) may be established between a transmit end and a receive end to transmit data. Radio bearers may be classified into a signaling radio bearer (signaling radio bearer, SRB) used to transmit signaling data and a data radio bearer (data radio bearer, DRB) used to transmit service data. A set of functional entities of a same radio bearer includes one PDCP layer entity, at least two RLC layer entities corresponding to the PDCP layer entity, at least one MAC entity corresponding to the at least two RLC layer entities, and at least one PHY entity corresponding to the at least one MAC entity.

Duplication transmission or duplication transmission at a PDCP layer usually means that a data packet of a radio bearer is replicated into a plurality of same packets (that is, duplication packets) at the PDCP layer, then the plurality of data packets are respectively delivered to a plurality of different RLC layer entities for transmission, and are transmitted to a MAC layer through different logical channels. The logical channel is a channel between an RLC layer and the MAC layer. It should be noted that duplication transmission (duplication transmission) in embodiments of this application is not retransmission. Re-sending refers to sending a same data packet again after the same data packet fails to be sent, or sending the same data packet for a plurality of consecutive times. Duplication transmission refers to replicating one data packet into two data packets, and respectively transmitting the two data packets through two logical channels. "Duplication" herein may also be understood as "replication".

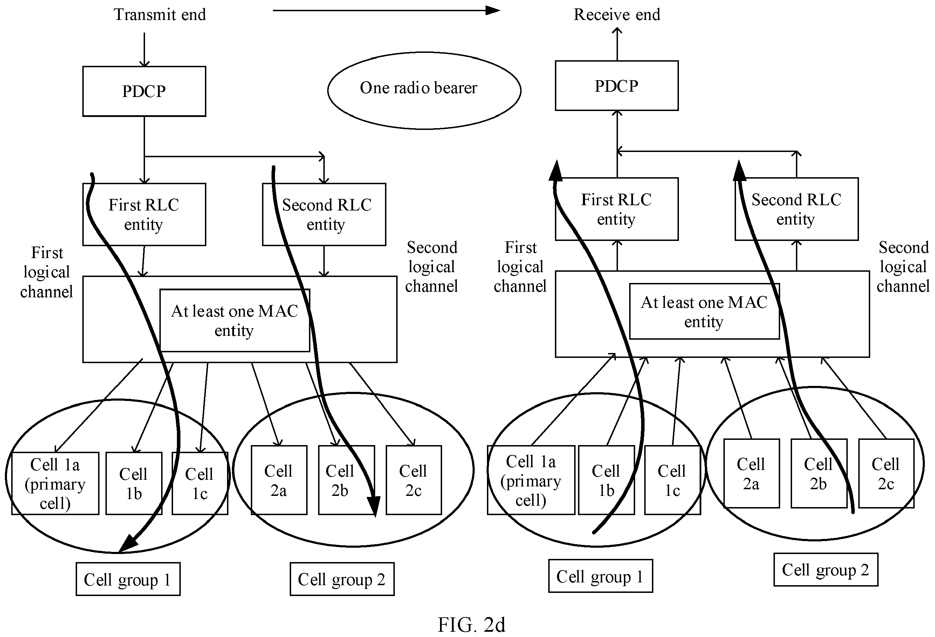

In the schematic diagram of duplication transmission of data shown in FIG. 2d, for one radio bearer between the transmit end and the receive end, on the transmit end, a same PDCP layer entity corresponds to at least two RLC layer entities, and each RLC layer entity corresponds to one logical channel to send data. Correspondingly, on the receive end, a same PDCP layer entity corresponds to at least two RLC layer entities, and each RLC layer entity corresponds to one logical channel to receive data. Therefore, the radio bearer between the transmit end and the receive end includes at least two logical channels. In the network architecture shown in FIG. 1a, FIG. 1b, or FIG. 1c, the transmit end may be a terminal device, and the receive end may be a network device; or the receive end may be a terminal device, and the transmit end may be a network device. In the network architecture shown in FIG. Id, the transmit end may be a first terminal device (for example, the terminal device 1301), and the receive end may be a second terminal device (for example, the terminal device 1302); or the receive end may be a second terminal device, and the transmit end may be a first terminal device. In this case, a DRB between the first terminal device and the second terminal device may alternatively be referred to as a sidelink DRB.

The transmit end and the receive end shown in FIG. 2d each include a same PDCP layer entity, and a first RLC layer entity and a second RLC layer entity that are associated with the same PDCP layer entity. The first RLC layer entity corresponds to a first logical channel, and the second RLC layer entity corresponds to a second logical channel. The transmit end sends, in a cell 1b or a cell group 1 corresponding to the first logical channel, data on the first logical channel to the receive end, and the receive end receives, in the cell 1b or the cell group 1 corresponding to the first logical channel, the data that is on the first logical channel and that is sent by the transmit end. The transmit end sends, in a cell 2b or a cell group 2 corresponding to the second logical channel, data on the second logical channel to the receive end, and the receive end receives, in the cell 2b or the cell group 2 corresponding to the second logical channel, the data on the second logical channel. In a duplication mode, duplication transmission is performed on data that is from a same PDCP layer entity on the second RLC layer entity of the transmit end and the first RLC layer entity of the transmit end, so that data sending reliability on the transmit end can be improved. It should be noted that, in FIG. 2d, an example in which the transmit end and the receive end each correspond to two cell groups is used. In another possible case, alternatively, the transmit end and the receive end may each correspond to one cell group. This is not specifically limited.

It should be noted that, the foregoing is described based on an example in which duplication is performed at a PDCP layer corresponding to two logical channels. In another possible embodiment, duplication may be performed at a PDCP layer corresponding to more logical channels. In other words, one radio bearer transmits, through more logical channels, a data packet replicated at the PDCP layer, for example, may transmit, through three or four logical channels, the data packet replicated at the PDCP layer.

Further, for example, the transmit end is a terminal device, and the receive end is a network device. After configuring a duplication transmission function for one DRB of the terminal device, the network device may activate or deactivate the duplication transmission function of the DRB. For example, refer to FIG. 2d. The network device configures a first RLC layer entity and a second RLC layer entity for a PDCP layer entity of the DRB. If the network device activates the duplication transmission function of the DRB, duplication transmission may be performed on data of the PDCP layer entity by using the first RLC layer entity and the second RLC layer entity. If the network device deactivates the duplication transmission function of the DRB, duplication transmission is no longer performed on data of the PDCP layer entity. For example, the data may be transmitted by using the first RLC layer entity or the second RLC layer entity. Alternatively, the network device may indicate, by using control signaling, the terminal device to transmit a data packet of the DRB by using which RLC layer entity or RLC layer entities. For example, the control signaling may be a MAC control element (control element, CE), and the MAC CE may include indication information of a DRB ID and an LCH ID. Correspondingly, after receiving the MAC CE, the terminal device transmits a data packet for an indicated DRB by using an indicated LCH or an indicated RLC layer entity.

### (4) Transmission mode of an RLC layer entity

The transmission mode of the RLC layer entity may include a transparent mode (transparent mode, TM), an unacknowledged mode (unacknowledged mode, UM), and an acknowledged mode (acknowledged mode, AM). If the transmission mode of the RLC layer entity is TM, the RLC layer entity does not perform any processing on an SDU delivered to the RLC layer entity, but directly and transparently transmits the SDU. If the transmission mode of the RLC layer entity is UM, the RLC layer entity may process (for example, add additional information to) an SDU delivered to the RLC layer entity, and then send an RLC PDU. In addition, no acknowledgment from a peer entity is required, and retransmission is no longer performed. If the transmission mode of the RLC layer entity is AM, the RLC layer entity may process (for example, add additional information to) an SDU delivered to the RLC layer entity, then send an RLC PDU, and requires an acknowledgment from a peer entity. If the peer entity acknowledges that the RLC PDU has been successfully received, the RLC PDU does not need to be retransmitted; otherwise, the RLC PDU needs to be retransmitted.

### (5) Buffer status report (buffer status report, BSR)

In a 5G communication system, an LCH may be used to carry data, and data of different service types may be carried through different LCHs. Each LCH may be associated with a scheduling priority, and the priority may be configured by the network device. For example, a higher priority may be configured for an LCH that carries URLLC service data, and a lower priority may be configured for an LCH that carries eMBB service data. In other words, a priority of the URLLC service data is higher, but a priority of the eMBB service data is lower. Therefore, when the terminal device has an available uplink resource, resource allocation may be preferentially performed for data with a high priority. When new data arrives, but no LCH has to-be-sent data or an LCH with a higher priority has to-be-sent data, a MAC layer of the terminal device may trigger a BSR, used to reflect a total amount of to-be-transmitted data of at least one LCH, for scheduling by the network device.

Based on the foregoing descriptions of related features, the following describes the solutions of embodiments of this application in detail with reference to Embodiment 1 to Embodiment 3.

### Embodiment 1

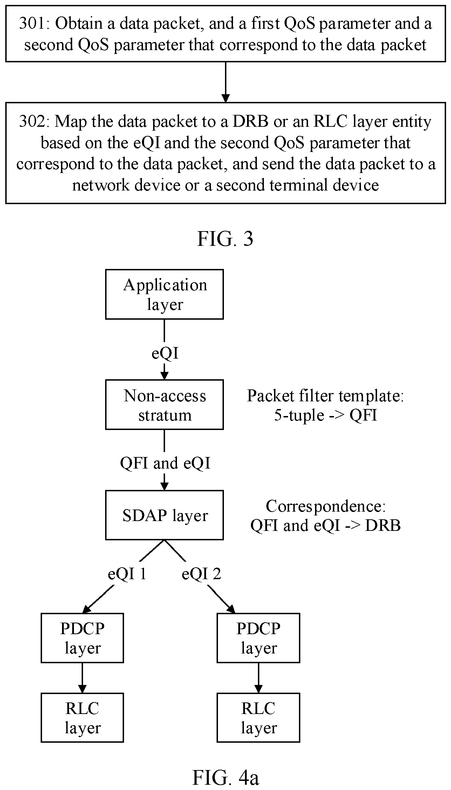

FIG. 3 is a schematic flowchart corresponding to a data transmission method according to Embodiment 1 of this application. As shown in FIG. 3, the method includes the following steps.

Step 301: A first terminal device obtains a data packet, and a first QoS parameter and a second QoS parameter that correspond to the data packet.

There may be a plurality of implementations in which the first terminal device obtains the data packet and the first QoS parameter corresponding to the data packet. In an example, an application layer of the first terminal device may obtain a data packet generated by an application program, and allocate a first QoS parameter to the data packet. In other words, the first QoS parameter may be allocated to the data packet by the application layer of the first terminal device. The application layer may allocate the first QoS parameter to the data packet based on a plurality of pieces of information. For example, the application layer may allocate the first QoS parameter to the data packet based on a QoS requirement of the data packet. A specific implementation of allocating the first QoS parameter to the data packet by the application layer is not limited in this embodiment of this application.

In another example, the first terminal device may be connected to another apparatus, and the another apparatus may be an industrial device, for example, a sensor or an operating arm. In this way, the first terminal device may receive a data packet and a first QoS parameter corresponding to the data packet from the another apparatus. In other words, the first QoS parameter may be allocated to the data packet by the industrial device. The industrial device may allocate the first QoS parameter to the data packet based on a plurality of pieces of information. This is not specifically limited. After receiving the data packet and the first QoS parameter corresponding to the data packet from the industrial device, the first terminal device may deliver, to a non-access stratum or an access stratum for processing, the data packet and the first QoS parameter corresponding to the data packet.

In another example, a first QoS parameter may be allocated to a data packet by a non-access stratum of the first terminal device. For example, if the data packet includes a TCP ACK, the non-access stratum may identify and allocate the first QoS parameter. After obtaining the data packet and the first QoS parameter corresponding to the data packet, the non-access stratum may deliver, to an access stratum, the data packet and the first QoS parameter corresponding to the data packet, or may determine, based on the first QoS parameter, a second QoS parameter (in this case, the second QoS parameter is a QFI') corresponding to the data packet, and then deliver, to the access stratum, the data packet and the second QoS parameter corresponding to the data packet. The non-access stratum may allocate the first QoS parameter to the data packet based on a plurality of pieces of information. This is not specifically limited.

In the following description, an example in which the first QoS parameter is allocated to the data packet by the application layer of the first terminal device is used for description. For another case, refer to this for processing. The first QoS parameter is referred to as an eQI below.

Step 302: The first terminal device maps the data packet to a DRB or an RLC layer entity based on the eQI and the second QoS parameter that correspond to the data packet, and sends the data packet to a network device or a second terminal device.

The following describes several possible implementations of step 301 and step 302 by using an example in which the data packet is a first data packet.

### Implementation 1

In Implementation 1, the second QoS parameter may be a QFI (different from a QFI').

Refer to FIG. 4a. A specific implementation of step 301 and step 302 may be as follows: An application layer of a first terminal device may obtain a first data packet and an eQI corresponding to the first data packet, and deliver, to a non-access stratum, the first data packet and the eQI corresponding to the first data packet. After receiving the first data packet and the eQI corresponding to the first data packet, the non-access stratum may determine, based on a packet filter template in a QoS rule, a QFI corresponding to the first data packet, and identify the corresponding QFI for the first data packet. The non-access stratum delivers, to an SDAP layer entity, the first data packet, and the QFI and the eQI that correspond to the first data packet. The SDAP layer entity maps the first data packet to a DRB based on the QFI and the eQI that correspond to the first data packet, and sends the first data packet to a network device or a second terminal device.

The first terminal device may obtain a correspondence between the QFI, the eQI, and a DRB (or may be described as a correspondence between QFI+eQI and a DRB), and then the SDAP layer entity of the first terminal device maps, based on the correspondence and the QFI and the eQI that correspond to the first data packet, the first data packet to the DRB corresponding to the QFI and the eQI. For example, the correspondence between the QFI, the eQI, and a DRB may be configured by the network device for the first terminal device by using RRC signaling. There may be a plurality of specific configuration manners. For example, the network device configures the correspondence between the QFI, the eQI, and a DRB by using an SDAP configuration (SDAP-Config) information element in a DRB addition (DRB-ToAddMod) information element carried in an RRC reconfiguration (RRC Reconfiguration) message.

Table 3 shows an example of the correspondence between the QFI, the eQI, and a DRB.

**Table 3: Example of the correspondence between the QFI, the eQI, and a DRB**

| QFI | eQI | DRB ID |
|---|---|---|
| QFI 1 | eQI 1 | DRB 1 |
| | eQI 2 | DRB 2 |
| QFI 2 | eQIs 1, 2, 3, 4, and 5 | DRB 3 |
| QFI 3 | eQIs 6, 7, 8, 9, and 10 | DRB 4 |

It can be learned from Table 3 that data packets, in QoS flows with a same QFI, corresponding to different eQIs may be mapped to a same DRB or different DRBs. For example, for a QoS flow whose QFI is 1, a data packet whose corresponding eQI is eQI 1 needs to be mapped to DRB 1 for processing and transmission, and a data packet whose corresponding eQI is eQI 2 needs to be mapped to DRB 2 for processing and transmission.

For example, it is assumed that the eQI corresponding to the first data packet is eQI 2, and the QFI corresponding to the first data packet is QFI 1. It can be learned from Table 3 that QFI 1+eQI 2 corresponds to DRB 2. In this case, the SDAP layer entity of the first terminal device may map the first data packet to DRB 2.

It is further assumed that the eQI corresponding to the first data packet is eQI 3, and the QFI corresponding to the first data packet is QFI 1. A DRB corresponding to QFI 1+eQI 3 does not exist in the correspondence shown in Table 3. In this case, in an example, when there is no DRB matching the QFI and the eQI that correspond to the first data packet, the first terminal device may send a request message 1 to the network device, where the request message 1 may include QFI 1 (or information used to indicate QFI 1) and eQI 3 (or information used to indicate eQI 3, for example, an index of eQI 3). Correspondingly, after receiving the request message 1, the network device may return a response message 1 to the first terminal device, where the response message 1 includes a DRB ID corresponding to QFI 1+eQI 3 (or information used to indicate a DRB corresponding to QFI 1+eQI 3). Then the first terminal device may map the first data packet to the DRB corresponding to QFI 1+eQI 3. Further, the first terminal device may update Table 3 based on the DRB corresponding to QFI 1+eQI 3. According to this manner, the network device may configure a DRB for the first terminal device based on a request message of the first terminal device, to avoid signaling overheads and maintenance complexity of the first terminal device that are caused when a large quantity of DRBs are configured for the first terminal device at the beginning.

In another example, when there is no DRB matching the QFI and the eQI that correspond to the first data packet, the first terminal device may map the first data packet to a default DRB. An implementation of the default DRB is: Each QFI may have a corresponding default DRB, and a default DRB corresponding to one QFI may be configured by the network device. For example, the network device configures, for QFI 1, DRB 1 as the default DRB. Alternatively, a default DRB corresponding to one QFI may be determined by the first terminal device according to a preset rule 1. For example, the preset rule 1 may be: In all DRBs corresponding to or associated with one QFI, a DRB with a smallest/largest DRB ID or corresponding to a smallest/largest LCH ID is the default DRB; or in all DRBs corresponding to or associated with one QFI, a DRB with a highest/lowest logical channel priority is the default DRB. Table 3 is used as an example, if it is determined that a DRB with a smallest DRB ID is the default DRB, DRB 1 is the default DRB corresponding to QFI 1. Another implementation of the default DRB is: All QFIs share one default DRB. The default DRB may be configured by the network device, or may be determined by the first terminal device according to a preset rule 2. For example, the preset rule 2 may be: In all DRBs or all DRBs associated with the SDAP layer entity, a DRB with a smallest/largest DRB ID or corresponding to a smallest/largest LCH ID is the default DRB, or a DRB with a highest/lowest logical channel priority is the default DRB. The preset rule 1 or the preset rule 2 may be predefined in a protocol, or may be determined and indicated by the network device to the terminal device.

In this example, in an optional solution, after mapping the first data packet to the default DRB, the first terminal device may further perform the operation in the previous example, to be specific, send the request message 1 to the network device to request the DRB corresponding to QFI 1+eQI 3, and update Table 3, so that a next data packet corresponding to QFI 1+eQI 3 is mapped to the DRB corresponding to QFI 1+eQI 3.

In Implementation 1, the first terminal device may encapsulate the eQI corresponding to the first data packet into the first data packet, and then send the first data packet to the network device or the second terminal device; or may not encapsulate the eQI corresponding to the first data packet into the data packet, but send the eQI to the network device or the second terminal device together with the first data packet.

For example, the first terminal device may encapsulate the eQI corresponding to the first data packet into the first data packet. For example, an SDAP header of the first data packet may include the eQI corresponding to the first data packet (or information used to indicate the eQI corresponding to the first data packet). For example, after receiving the first data packet, and QFI 1 and the eQI that correspond to the first data packet, the SDAP layer entity of the first terminal device may encapsulate the eQI corresponding to the first data packet into the SDAP header of the first data packet, and then map an encapsulated first data packet to the DRB or deliver the encapsulated first data packet to a PDCP layer entity. Alternatively, a PDCP header of the first data packet may include the eQI corresponding to the first data packet (or information used to indicate the eQI corresponding to the first data packet). For example, when delivering the first data packet to a PDCP layer entity, the SDAP layer entity may further indicate the eQI corresponding to the first data packet. Correspondingly, after receiving the first data packet delivered by the SDAP layer entity, the PDCP layer entity may encapsulate the eQI corresponding to the first data packet into the PDCP header of the first data packet.

It should be noted that, if one PDCP layer entity corresponds only to one eQI, when delivering the first data packet to the PDCP layer entity, the SDAP layer entity may alternatively no longer indicate the eQI corresponding to the first data packet. Correspondingly, after receiving the first data packet delivered by the SDAP layer entity, the PDCP layer entity may encapsulate the eQI corresponding to the PDCP layer entity into the PDCP header of the first data packet. The SDAP header or the PDCP header of the first data packet includes the eQI corresponding to the first data packet, so that the second terminal device can obtain the eQI corresponding to the first data packet after receiving the first data packet.

In Implementation 1, the network device may independently configure a plurality of DRBs corresponding to a same QFI, in other words, may independently configure PDCP layer entities, RLC layer entities, and logical channels. For example, DRB 1 and DRB 2 that correspond to QFI 1 may be independently configured. In this case, configuration of a PDCP layer entity 1 corresponding to DRB 1 may be different from configuration of a PDCP layer entity 2 corresponding to DRB 2, and/or configuration of an RLC layer entity (or a logical channel) associated with the PDCP layer entity 1 may be different from configuration of an RLC layer entity (a logical channel) associated with the PDCP layer entity 2. That the configuration of the PDCP layer entity 1 is different from the configuration of the PDCP layer entity 2 may mean that a parameter of the PDCP layer entity 1 is different from a parameter of the PDCP layer entity 2. For example, a parameter of a PDCP layer entity may include discard duration (where the PDCP layer entity starts a timer (timer) after receiving a PDCP SDU, and performs a PDCP SDU discard (discard) operation after the timer expires, where duration of the timer may be referred to as the discard duration). Discard duration of the PDCP layer entity 1 is 10 ms, and discard duration of the PDCP layer entity 2 is 20 ms. That the configuration of the RLC layer entity (for example, including an RLC layer entity 1) associated with the PDCP layer entity 1 is different from the configuration of the RLC layer entity (for example, including an RLC layer entity 1a) associated with the PDCP layer entity 2 may mean that a transmission mode of the RLC layer entity 1 is different from a transmission mode of the RLC layer entity 1a. For example, the transmission mode of the RLC layer entity 1 is UM, and the transmission mode of the RLC layer entity 1a is AM

In this way, because a plurality of DRBs corresponding to a same QFI may be independently configured, distinguishing processing may be performed on data packets in a same QoS flow by mapping, to different DRBs, data packets corresponding to a same QFI but corresponding to different eQIs, in other words, distinguishing processing can be performed, on an air interface, on data packets with different delay or reliability requirements.

### Implementation 2

In Implementation 2, the second QoS parameter may be a QFI'.

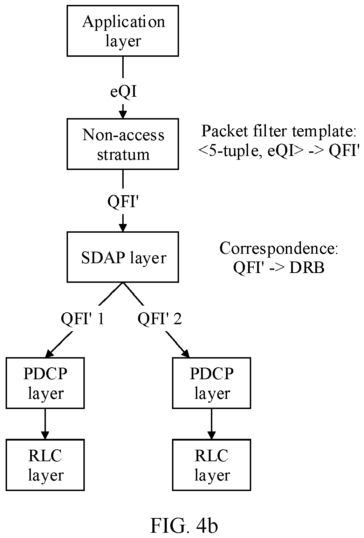

Refer to FIG. 4b. A specific implementation of step 301 and step 302 may be as follows: An application layer of a first terminal device may obtain a first data packet and an eQI corresponding to the first data packet, and deliver, to a non-access stratum, the first data packet and the eQI corresponding to the first data packet. After receiving the first data packet and the eQI corresponding to the first data packet, the non-access stratum may determine a QFI' corresponding to the first data packet, and identify the corresponding QFI' for the first data packet. The non-access stratum delivers, to an SDAP layer entity, the first data packet and the QFI' corresponding to the first data packet. The SDAP layer entity maps the first data packet to a DRB based on the QFI' corresponding to the first data packet, and sends the first data packet to a network device or a second terminal device.

For example, the first terminal device may obtain the correspondence shown in Table 2, and then the non-access stratum of the first terminal device may determine, based on the correspondence shown in Table 2, the eQI and a 5-tuple that correspond to the first data packet, the QFI' corresponding to the first data packet. The first terminal device may obtain the correspondence shown in Table 2 in a plurality of manners. For example, the correspondence shown in Table 2 may be configured by a core network device for the first terminal device by using a non-access stratum message. For example, an SMF entity configures the correspondence for the first terminal device by using a PDU session establishment or modification (PDU session establishment/modification) procedure. It can be learned from Table 2 that, data packets with different eQIs in data flows with a same 5-tuple may correspond to different QFI's, and may be processed and transmitted through different DRBs.

For example, the first terminal device may obtain a correspondence between the QFI' and a DRB ID, and then the SDAP layer entity of the first terminal device may map, based on the correspondence between the QFI' and a DRB ID, the first data packet to the DRB corresponding to the QFI'. For example, the first terminal device may obtain the correspondence between the QFI' and a DRB ID from the network device. For a manner in which the first terminal device obtains the correspondence between the QFI' and a DRB ID, refer to a manner in which a terminal device obtains a correspondence between a QFI and a DRB ID in an existing solution. Details are not described.

According to Implementation 2, the eQI is introduced, and the non-access stratum maps the 5-tuple and the eQI to the QFI'. In this way, distinguishing processing can be performed on data packets with different eQIs, in other words, distinguishing processing can be performed, on an air interface, on data packets with different delay or reliability requirements. In addition, in this manner, an operation of an access stratum does not need to be changed, and applicability is strong.

### Implementation 3

In Implementation 3, the second QoS parameter may be a QFI (different from a QFI').

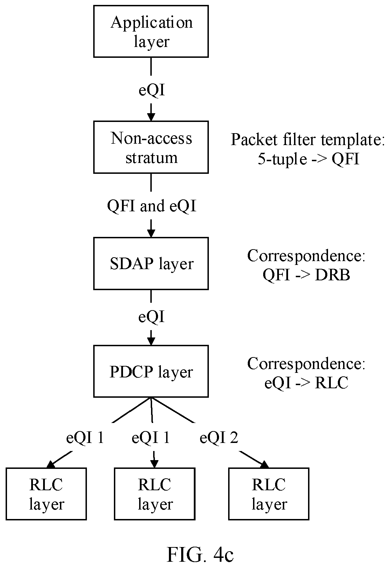

Refer to FIG. 4c. A specific implementation of step 301 and step 302 may be as follows: An application layer of a first terminal device may obtain a first data packet and an eQI corresponding to the first data packet, and deliver, to a non-access stratum, the first data packet and the eQI corresponding to the first data packet. After receiving the first data packet and the eQI corresponding to the first data packet, the non-access stratum may determine, based on a packet filter template in a QoS rule, a QFI corresponding to the first data packet, and identify the corresponding QFI for the first data packet. The non-access stratum delivers, to an SDAP layer entity, the first data packet, and the QFI and the eQI that correspond to the first data packet. The SDAP layer entity maps, to a DRB (to be specific, delivers, to a PDCP layer entity corresponding to the DRB) based on the QFI corresponding to the first data packet, the first data packet and the eQI corresponding to the first data packet, and the PDCP layer entity maps the first data packet to an RLC layer entity or an LCH based on the eQI corresponding to the first data packet and sends the first data packet to a network device or a second terminal device.

The PDCP layer entity corresponding to the DRB may be associated with a plurality of RLC layer entities, and there is a correspondence between the plurality of RLC layer entities and the eQI. For example, the network device may configure, for the terminal device, the plurality of RLC layer entities associated with the PDCP layer entity, and a correspondence between the eQI and the RLC layer entities. There may be a plurality of specific configuration manners. In a possible configuration manner, when configuring an RLC layer entity or a logical channel corresponding to the RLC layer entity, the network device indicates a DRB ID and an eQI set in a configuration information element, indicating that the RLC layer entity is associated with a PDCP layer entity corresponding to the DRB ID, and an eQI corresponding to the RLC layer entity is an eQI included in the eQI set (or the RLC layer entity is configured to process a data packet that is mapped to the DRB and whose corresponding eQI is the eQI included in the eQI set). The eQI set may include one eQI or a plurality of eQIs. For example, a DRB ID indicated by the network device in a configuration information element (RLC-BearerConfig or RLC-Config) of an RLC layer entity 1 is DRB 1, and an indicated eQI set includes eQI 1 and eQI 2. In this way, the first terminal device may learn that the RLC layer entity 1 is associated with a PDCP layer entity 1 corresponding to DRB 1, eQIs corresponding to the RLC layer entity 1 include eQI 1 and eQI 2 (or the RLC layer entity 1 is configured to process a data packet that is mapped to DRB 1 and whose corresponding eQI is eQI 1 or eQI 2).

It should be understood that, because the RLC layer entity is in one-to-one correspondence with the LCH, details about the LCH corresponding to the RLC layer entity may alternatively be obtained through adaptive extension from the descriptions of the RLC layer entity in embodiments of this application. For example, if there is a correspondence between a plurality of RLC layer entities and an eQI, a correspondence between a plurality of LCHs corresponding to the plurality of RLC layer entities and the eQI may alternatively be obtained through adaptive extension, and this also falls within the protection scope of this application.

As shown in Table 4, a PDCP layer entity 1 corresponding to DRB 1 is associated with an RLC layer entity 1 and an RLC layer entity 2, each RLC layer entity corresponds to one eQI set, and the eQI set may include one or more eQIs. An eQI set corresponding to the RLC layer entity 1 includes eQI 1 and eQI 2, and an eQI set corresponding to the RLC layer entity 2 includes eQI 3 and eQI 4.

**Table 4: Example of a correspondence between an RLC layer entity associated with the PDCP layer entity 1 and an eQI set**

| DRB ID | RLC layer entity | eQI set |
|---|---|---|
| DRB 1 | RLC layer entity 1 | eQI 1 and eQI 2 |
| DRB 1 | RLC layer entity 2 | eQI 3 and eQI 4 |

It can be learned from Table 4 that data packets, in a same DRB, corresponding to different eQIs may be mapped to a same RLC layer entity or different RLC layer entities. For example, in DRB 1, a data packet whose corresponding eQI is eQI 1 or eQI 2 needs to be mapped to the RLC layer entity 1 for processing and transmission, and a data packet whose corresponding eQI is eQI 3 or eQI 4 needs to be mapped to the RLC layer entity 2 for processing and transmission.

In this way, the first terminal device may obtain a correspondence between an RLC layer entity associated with a PDCP layer entity and an eQI, and then the PDCP layer entity of the first terminal device may map, based on the correspondence and the eQI corresponding to the first data packet, the first data packet to an RLC layer entity corresponding to the eQI.

It is assumed that the eQI corresponding to the first data packet mapped to DRB 1 is eQI 2. It can be learned from Table 4 that eQI 2 corresponds to the RLC layer entity 1. In this case, the PDCP layer entity 1 corresponding to DRB 1 may map the first data packet to the RLC layer entity 1.

Alternatively, it is assumed that the eQI corresponding to the first data packet mapped to DRB 1 is eQI 5. An RLC layer entity corresponding to eQI 5 does not exist in the correspondence shown in Table 4. In this case, in an example, when there is no RLC layer entity matching the eQI corresponding to the first data packet, the first terminal device may send a request message 2 to the network device, where the request message 2 may include eQI 5 (or information used to indicate eQI 5, for example, an index of eQI 5). Correspondingly, after receiving the request message 2, the network device may return a response message 2 to the first terminal device, where the response message 2 includes an identifier of the RLC layer entity that corresponds to eQI 5 and that is in a plurality of RLC layer entities associated with the PDCP layer entity 1 (or information used to indicate the RLC layer entity corresponding to eQI 5), and then, the first terminal device may map the first data packet to the RLC layer entity corresponding to eQI 5. Further, the first terminal device may update Table 4 based on the RLC layer entity corresponding to eQI 5. According to this manner, the network device may configure an RLC layer entity for the first terminal device based on a request message of the first terminal device, to avoid signaling overheads and maintenance complexity of the first terminal device that are caused when a large quantity of RLC layer entities are configured for the first terminal device at the beginning.

In another example, when there is no RLC layer entity matching the eQI corresponding to the first data packet, the first terminal device may map the first data packet to a default RLC layer entity. The default RLC layer entity may be a default RLC layer entity corresponding to DRB 1. The default RLC layer entity corresponding to DRB 1 may be configured by the network device. For example, the network device configures, for DRB 1, the RLC layer entity 1 as the default RLC layer entity. There may be a plurality of specific configuration manners. For example, the network device indicates, in a configuration information element of the RLC layer entity 1, the RLC layer entity 1 as the default RLC layer entity; or the default RLC layer entity corresponding to DRB 1 may be determined by the first terminal device according to a preset rule 3. For example, the preset rule 3 may be: In RLC layer entities associated with the PDCP layer entity corresponding to DRB 1, an RLC layer entity corresponding to a smallest/largest LCH ID is the default RLC layer entity. Table 4 is used as an example, if it is determined that an RLC layer entity corresponding to a smallest LCH ID is the default RLC layer entity, the RLC layer entity 1 is the default RLC layer entity corresponding to DRB 1. The preset rule 3 may be predefined in a protocol, or may be determined and indicated by the network device to the terminal device.

In Implementation 3, when a PDCP layer entity corresponding to a DRB is associated with a plurality of RLC layer entities, the RLC layer entities may be independently configured. For example, the plurality of RLC layer entities may be configured in different transmission modes. For example, the PDCP layer entity corresponding to DRB 1 is associated with two RLC layer entities (an RLC layer entity 1 and an RLC layer entity 2), where the RLC layer entity 1 may be configured in UM, and the RLC layer entity 2 may be configured in AM. In this way, because the plurality of RLC layer entities associated with the PDCP layer entity are independently configured, distinguishing processing can be performed on data packets in a same QoS flow by mapping data packets with different eQIs to different RLC layer entities.

In Implementation 3, the network device may configure a group of parameters or a plurality of groups of parameters for a PDCP layer entity corresponding to a DRB. For example, the parameter of the PDCP layer entity may include one or more possible parameters. The following uses an example in which the parameter of the PDCP layer entity includes discard duration for description.

When configuring a plurality of groups of parameters for the PDCP layer entity, the network device may further configure a correspondence between an eQI and a plurality of groups of parameters. Table 5 shows an example of the correspondence between an eQI and a plurality of groups of parameters.

**Table 5: Example of the correspondence between an eQI and a plurality of groups of parameters**

| eQI | Discard duration |
|---|---|
| eQI 1, eQI 2, eQI 3, and eQI 4 | Discard duration 1 (for example, 10 ms) |
| eQI 4, eQI 5, and eQI 6 | Discard duration 2 (for example, 15 ms) |
| eQI 7 and eQI 8 | Discard duration 3 (for example, 20 ms) |

When the network device configures a group of parameters (for example, configures the discard duration 1) for the PDCP layer entity, the PDCP layer entity may process, based on the discard duration, a data packet delivered to the PDCP layer entity. If the network device configures a plurality of groups of parameters (for example, the discard duration 1, the discard duration 2, and the discard duration 3) and a correspondence between a first QoS parameter and the plurality of groups of parameters for the PDCP layer entity, the PDCP layer entity may process a data packet based on the correspondence shown in Table 5 by using a parameter, of the PDCP layer entity, corresponding to a first QoS parameter corresponding to the data packet. For example, if a first QoS parameter corresponding to a data packet 1 is eQI 1, the data packet 1 may be processed by using the discard duration 1. For another example, if a first QoS parameter corresponding to a data packet 2 is eQI 4, the data packet 2 may be processed by using the discard duration 2. In this way, because a plurality of groups of parameters are configured for the PDCP layer entity, data packets with different eQIs are processed by using a same parameter or different parameters. In this way, distinguishing processing can be performed on data packets in a same QoS flow.

In Implementation 3, the PDCP layer entity maps, based on an eQI corresponding to a data packet, the data packet to an RLC layer entity corresponding to the eQI. Therefore, in this embodiment of this application, when a duplication transmission function is configured, the duplication transmission function may be configured for the eQI in one DRB, to be specific, the data packet corresponding to the eQI may be replicated and delivered to a plurality of RLC layer entities. A PDCP layer entity corresponding to the DRB may be associated with a plurality of RLC layer entities, the eQI configured for duplication transmission corresponds to at least two of the plurality of RLC layer entities, and the at least two RLC layer entities are used to implement duplication transmission. For example, refer to the following Table 6. eQI 3 corresponds to an RLC layer entity 1, an RLC layer entity 2, and an RLC layer entity 3, so that the duplication transmission function may be configured for eQI 3.

**Table 6: Example of a correspondence between an RLC layer entity and an eQI set**

| DRB ID | RLC layer entity | eQI set |
|---|---|---|
| DRB 1 | RLC layer entity 1 | eQI 1, eQI 2, and eQI 3 |
| DRB 1 | RLC layer entity 2 | eQI 3 and eQI 4 |
| DRB 1 | RLC layer entity 3 | eQI 3 |

Further, in an example, the network device may activate or deactivate, by using control signaling, the duplication transmission function configured for eQI 3. For example, if the network device activates, by using the control signaling, the duplication transmission function configured for eQI 3, and the eQI corresponding to the first data packet is eQI 3, the PDCP layer entity of the first terminal device may map the first data packet to the RLC layer entity 1, the RLC layer entity 2, and the RLC layer entity 3 for duplication transmission. If the network device deactivates, by using the control signaling, the duplication transmission function configured for eQI 3, the PDCP layer entity of the first terminal device may map the first data packet to the RLC layer entity 1 for transmission, map the first data packet to the RLC layer entity 2 for transmission, or map the first data packet to the RLC layer entity 3 for transmission.

In another example, the network device may indicate, by using the control signaling, to perform duplication transmission by using which RLC layer entities corresponding to eQI 3. For example, if the network device indicates the RLC layer entity 1 and the RLC layer entity 2 by using the control signaling, the PDCP layer entity of the first terminal device may map the first data packet to the RLC layer entity 1 and the RLC layer entity 2 for duplication transmission. For example, the control signaling may include DRB 1 (or information used to indicate DRB 1), eQI 3 (or information used to indicate eQI 3), and identifiers of the RLC layer entity 1 and the RLC layer entity 2 (information used to indicate the RLC layer entity 1 and the RLC layer entity 2, LCH 1 corresponding to the RLC layer entity 1 and LCH 2 corresponding to the RLC layer entity 2, or information used to indicate LCH 1 and LCH 2).

It should be noted that the control signaling may be RRC signaling or a MAC CE. This is not specifically limited.

In Implementation 3, an SDAP header, a PDCP header, or an RLC header of the first data packet may include the eQI corresponding to the first data packet (or information used to indicate the eQI corresponding to the first data packet).

In Implementation 3, when reporting a BSR, a MAC layer of the terminal device needs to calculate amounts of to-be-transmitted data of different LCHs. A possible manner of calculating the amounts of to-be-transmitted data of different LCHs is: for one of the LCHs (for example, LCH 1), determining amounts of to-be-transmitted data of an RLC layer entity 1 and a PDCP layer entity 1 that correspond to LCH 1 as a buffer status (buffer status, BS) amount of LCH 1; similarly, for LCH 2, determining amounts of to-be-transmitted data of an RLC layer entity 2 and a PDCP layer entity 1 that correspond to LCH 2 as a BS amount of LCH 2. It can be learned that, according to this manner, the amount of to-be-transmitted data of the PDCP layer entity 1 is used for calculation when the BS amounts of LCH 1 and LCH 2 are calculated. For example, the to-be-transmitted data of the PDCP layer entity 1 includes a data packet 1 and a data packet 2. An eQI corresponding to the data packet 1 is eQI 1, and an eQI corresponding to the data packet 2 is eQI 4. Refer to Table 4. During subsequent transmission, the data packet 1 is mapped to the RLC layer entity 1 (or LCH 1) for transmission, and the data packet 2 is mapped to the RLC layer entity 2 (or LCH 2) for transmission. However, the data packet 1 and the data packet 2 are used for calculation when the BS amount of LCH 1 is calculated, and the data packet 1 and the data packet 2 are also used for calculation when the BS amount of LCH 2 is calculated. Consequently, a total BS amount reported to the network device exceeds an actual amount of to-be-transmitted data of the terminal device, causing a waste of subsequent scheduling resources.

Based on this, in this embodiment of this application, a data amount on a PDCP layer entity may be allocated to different LCHs according to a proportion. A specific proportion may be configured by the network device, may be indicated by the application layer, or may be determined by the terminal device. For example, a data amount on the PDCP layer entity 1 is 100. Because the PDCP layer entity 1 is associated with the RLC layer entity 1, the RLC layer entity 2, and the RLC layer entity 3, the data amount on the PDCP layer entity 1 may be allocated to LCH 1, LCH 2, and LCH 3 according to a proportion when BS amounts of LCH 1, LCH 2, and LCH 3 are calculated. For example, an amount of to-be-transmitted data of the RLC layer entity 1 corresponding to LCH 1 and 40% of the amount of to-be-transmitted data of the PDCP layer entity 1 may be determined as the BS amount of LCH 1, an amount of to-be-transmitted data of the RLC layer entity 2 corresponding to LCH 2 and 30% of the amount of to-be-transmitted data of the PDCP layer entity 1 may be determined as the BS amount of LCH 2, and an amount of to-be-transmitted data of the RLC layer entity 3 corresponding to LCH 3 and 30% of the amount of to-be-transmitted data of the PDCP layer entity 1 may be determined as the BS amount of LCH 3. In this way, a resource waste caused because the total BS amount reported to the network device exceeds the actual amount of to-be-transmitted data of the terminal device can be effectively reduced.

For Implementation 1, Implementation 2, and Implementation 3, it should be noted that after obtaining the first data packet and the eQI corresponding to the first data packet, the application layer of the first terminal device may encapsulate the eQI or the information used to indicate the eQI into the first data packet, for example, encapsulate the eQI or the information used to indicate the eQI into a header (header) generated by the application layer for the first data packet, and deliver the first data packet to the non-access stratum. Further, after receiving the first data packet, the non-access stratum (or the access stratum) may strip off the header generated by the application layer, to obtain the eQI corresponding to the first data packet, to perform subsequent processing. It should be understood that the stripped header may not be transmitted on the air interface. Alternatively, the first terminal device may not encapsulate the eQI into the first data packet, but deliver the eQI to the non-access stratum or the access stratum together with the first data packet.

It can be learned from the foregoing content that, in this embodiment of this application, the eQI is introduced to implement distinguishing processing of data packets at a finer granularity on the air interface or a sidelink interface, so that different requirements of users can be effectively satisfied, for example, requirements of a real-time viewing user and a delayed viewing user can be satisfied.

### Embodiment 2

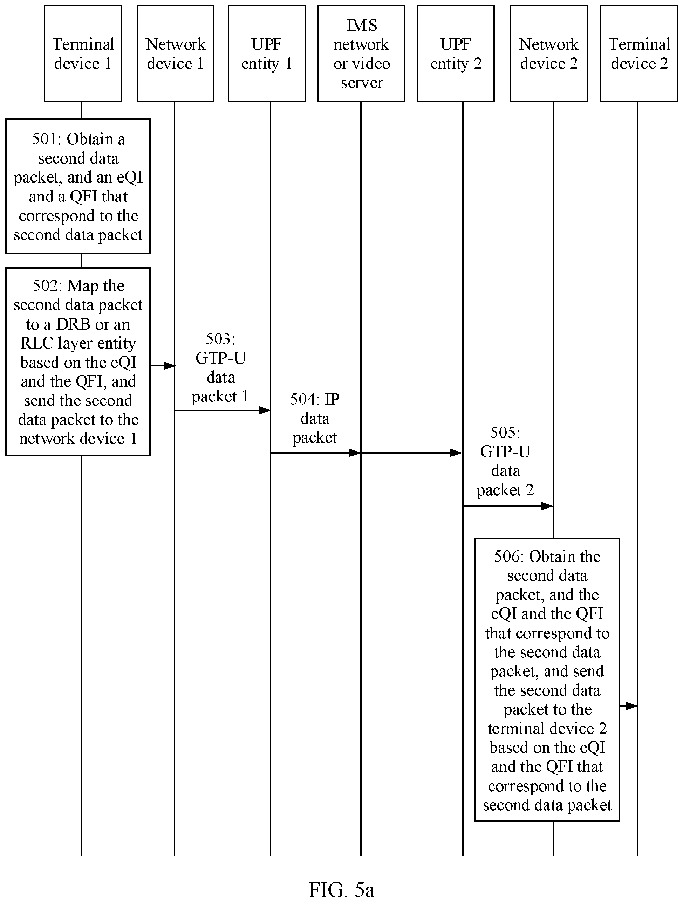

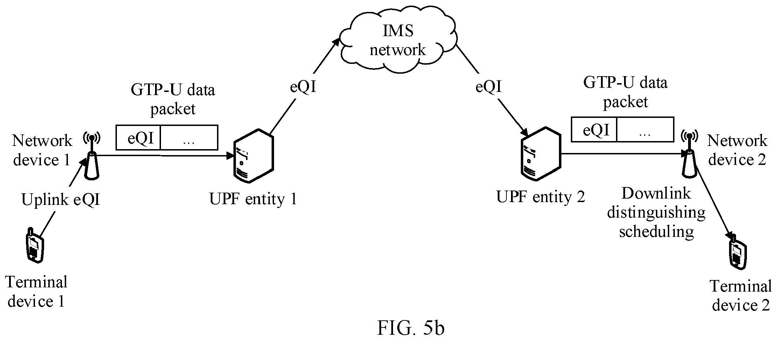

FIG. 5a is a schematic flowchart corresponding to a data transmission method according to Embodiment 2 of this application. FIG. 5b is a schematic diagram of a data transmission process according to Embodiment 2 of this application.

As shown in FIG. 5a and FIG. 5b, the following steps are included.

Step 501: A terminal device 1 obtains a second data packet, and an eQI and a QFI that correspond to the second data packet.

Step 502: The terminal device 1 maps the second data packet to a DRB or an RLC layer entity based on the eQI and the QFI, and sends the second data packet to a network device 1.

For example, the terminal device 1 may send the second data packet to the network device 1 by using Implementation 1 or Implementation 3 described in Embodiment 1.

Step 503: The network device 1 obtains the second data packet, and the eQI and the QFI that correspond to the second data packet, and sends a GTP-U data packet 1 to a UPF entity 1.

Herein, the GTP-U data packet 1 may include the second data packet and indication information 1, and the indication information 1 is used to indicate the eQI corresponding to the second data packet. For example, the indication information 1 may include the eQI corresponding to the second data packet, an index of the eQI corresponding to the second data packet, or other information used to indicate the eQI corresponding to the second data packet. This is not specifically limited. Further, the indication information 1 may be used to indicate the QFI corresponding to the second data packet. For example, the indication information 1 may be carried in a GTP-U header (GTP-U header).

The network device 1 may obtain the eQI corresponding to the second data packet in a plurality of manners. In a possible manner, the terminal device 1 transmits, to the network device 1, the eQI corresponding to the second data packet. For example, when the terminal device 1 uses Implementation 1, the eQI corresponding to the second data packet (or information used to indicate an eQI corresponding to a first data packet) may be carried in an SDAP header or a PDCP header. When the terminal device uses Implementation 3, the eQI corresponding to the second data packet (or information used to indicate an eQI corresponding to a first data packet) may be carried in an SDAP header, a PDCP header, or an RLC header. For another example, when the terminal device 1 uses Implementation 1 or Implementation 3, the eQI corresponding to the second data packet (or information used to indicate an eQI corresponding to a first data packet) is not encapsulated in the second data packet, but is transmitted to the network device 1 together with the second data packet. In another possible manner, the terminal device 1 does not transmit, to the network device 1, the eQI corresponding to the second data packet, and the network device 1 may determine, based on the DRB or the RLC layer entity that carries the second data packet, the eQI corresponding to the second data packet. For example, when the terminal device uses Implementation 1, if the DRB corresponds to one eQI, the network device may determine, based on the DRB that carries the second data packet, the eQI corresponding to the second data packet. When the terminal device uses Implementation 3, if the RLC layer entity corresponds to one eQI, the network device may determine, based on the RLC layer entity that carries the second data packet, the eQI corresponding to the second data packet.

Step 504: The UPF entity 1 obtains the second data packet, and the eQI and the QFI that correspond to the second data packet, and transmits, to a UPF entity 2 by using an IMS network or a server, the second data packet, and the eQI and the QFI that correspond to the second data packet.

Herein, the UPF entity 1 may send an IP data packet 1 to an IP multimedia subsystem (IP multimedia subsystem, IMS) network or a video server (video server), where the IP data packet 1 includes the second data packet and the indication information 1, and the indication information 1 may be carried in a protocol header of a layer of the IP data packet 1. Correspondingly, the IMS network or the video server sends an IP data packet 2 to the UPF entity 2, where the IP data packet 2 includes the second data packet and the indication information 1, and the indication information 1 may be carried in a protocol header of a layer of the IP data packet 2.

Step 505: The UPF entity 2 obtains the second data packet, and the eQI and the QFI that correspond to the second data packet, and sends a GTP-U data packet 2 to a network device 2.

Herein, the GTP-U data packet 2 may include the second data packet and the indication information 1.

Step 506: The network device 2 obtains the second data packet, and the eQI and the QFI that correspond to the second data packet, and sends the second data packet to a terminal device 2 based on the eQI and the QFI that correspond to the second data packet.

Herein, the network device 2 may transmit the second data packet to the terminal device 2 by using Implementation 1 or Implementation 3 described in Embodiment 1. It should be understood that, because the network device 2 does not have an application layer or a non-access stratum, when Implementation 1 or Implementation 3 is used, after obtaining, from the GTP-U data packet, the second data packet, and the eQI and the QFI that correspond to the second data packet, the network device 2 may deliver, to an SDAP layer entity, the second data packet, and the eQI and the QFI that correspond to the second data packet, to perform a corresponding operation. For example, when Implementation 1 is used, the SDAP layer entity may map, based on the eQI and the QFI that correspond to the second data packet, the second data packet to the DRB corresponding to the eQI and the QFI. When Implementation 3 is used, the SDAP layer entity may map, based on the QFI corresponding to the second data packet, the second data packet to the DRB corresponding to the QFI, so that a PDCP layer entity corresponding to the DRB may map, based on the eQI corresponding to the second data packet, the second data packet to the RLC layer entity corresponding to the eQI.

According to the foregoing method, QoS of a data packet is further refined based on an existing QFI, and end-to-end distinguishing processing is performed on data packets by using the QFI and the eQI.

### Embodiment 3

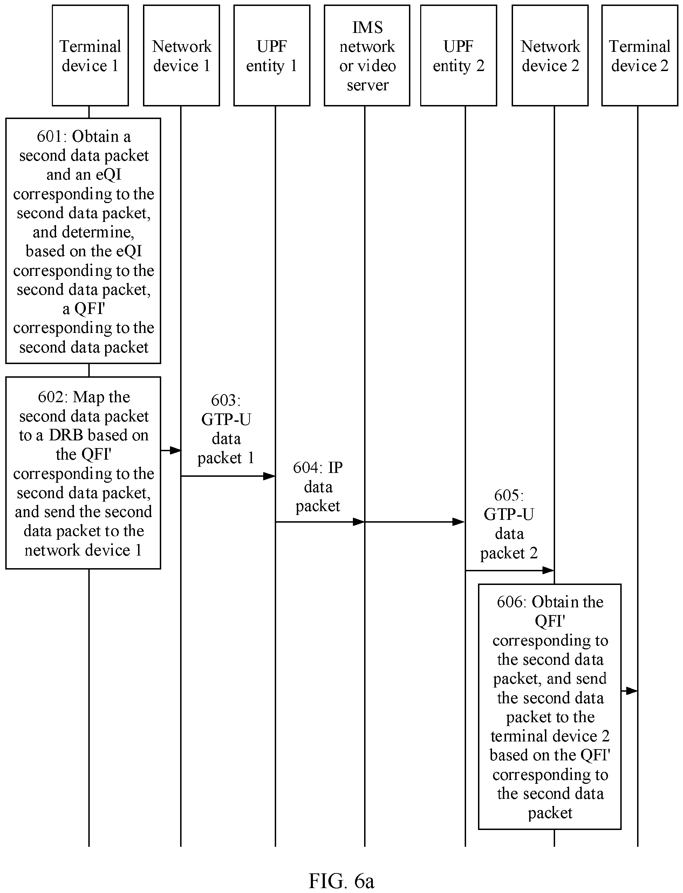

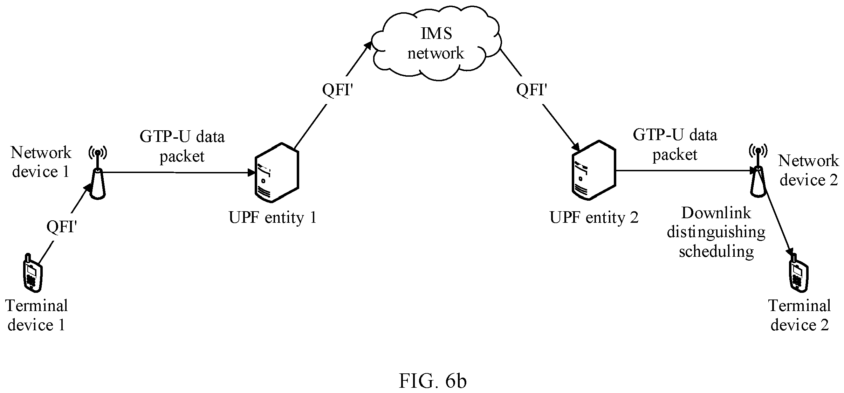

FIG. 6a is a schematic flowchart corresponding to a data transmission method according to Embodiment 3 of this application. FIG. 6b is a schematic diagram of a data transmission process according to Embodiment 3 of this application.

As shown in FIG. 6a and FIG. 6b, the following steps are included.

Step 601: A terminal device 1 obtains a second data packet and an eQI corresponding to the second data packet, and determines, based on the eQI corresponding to the second data packet, a QFI' corresponding to the second data packet.

Step 602: The terminal device 1 maps the second data packet to a DRB based on the QFI' corresponding to the second data packet, and sends the second data packet to a network device 1.

For example, the terminal device 1 may send the second data packet to the network device 1 by using Implementation 2 described in Embodiment 1.

Step 603: The network device 1 obtains the second data packet and the QFI' corresponding to the second data packet, and sends a GTP-U data packet 1 to a UPF entity 1.

Herein, the GTP-U data packet 1 may include the second data packet and indication information 2, and the indication information 2 is used to indicate the QFI' corresponding to the second data packet. For example, the indication information 2 may include the QFI' corresponding to the second data packet, an index of the QFI' corresponding to the second data packet, or other information used to indicate the QFI' corresponding to the second data packet. This is not specifically limited. For example, the indication information 2 may be carried in a GTP-U header.

The network device 1 may obtain the QFI' corresponding to the second data packet in a plurality of manners. For example, reference may be made to a manner in which a network device obtains a QFI corresponding to a data packet in a conventional technology. Details are not described herein.

Step 604: The UPF entity 1 obtains the second data packet and the QFI' corresponding to the second data packet, and transmits, to a UPF entity 2 by using an IMS network or a video server, the second data packet and the QFI' corresponding to the second data packet.

Step 605: The UPF entity 2 obtains the second data packet and the QFI' corresponding to the second data packet, and sends a GTP-U data packet 2 to a network device 2.

Herein, the GTP-U data packet 2 may include the second data packet and the indication information 2.

Step 606: The network device 2 obtains the second data packet and the QFI' corresponding to the second data packet, and sends the second data packet to a terminal device 2 based on the QFI' corresponding to the second data packet.

Herein, the network device 2 may transmit the second data packet to the terminal device 2 by using Implementation 2 described in Embodiment 1. It should be understood that, because the network device does not have an application layer or a non-access stratum, when Implementation 2 is used, after obtaining, from the GTP-U data packet, the second data packet and the QFI' corresponding to the second data packet, the network device 2 may deliver, to an SDAP layer entity, the second data packet and the QFI' corresponding to the second data packet, to perform a corresponding operation. For example, the SDAP layer entity may map, based on the QFI' corresponding to the second data packet, the second data packet to the DRB corresponding to the QFI'.

In the foregoing method, an existing QFI is improved to the QFI', so that QoS of a data packet is refined, and end-to-end distinguishing processing is performed on data packets by using the QFI'.

The foregoing mainly describes the solutions provided in embodiments of this application from a perspective of the device interaction. It may be understood that to implement the foregoing functions, a network device or a terminal device may include a corresponding hardware structure and/or software module for implementing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional unit division may be performed on the terminal device and the network device based on the foregoing method example. For example, each functional unit may be obtained through division based on a corresponding function, or two or more functions may be integrated into one unit. The integrated unit may be implemented in a form of hardware, or may be implemented in a form of a software functional unit.

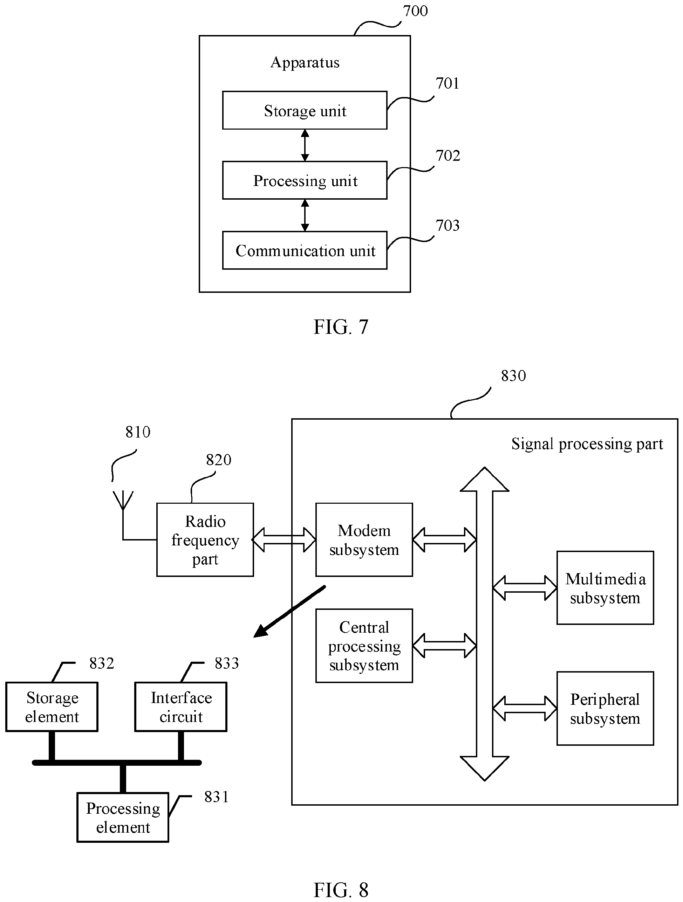

When an integrated unit is used, FIG. 7 is a possible example block diagram of an apparatus 700 according to an embodiment of this application. As shown in FIG. 7, the apparatus 700 may include a processing unit 702 and a communication unit 703. The processing unit 702 is configured to control and manage an action of the apparatus 700. The communication unit 703 is configured to support the apparatus 700 in communicating with another device. Optionally, the communication unit 703 is also referred to as a transceiver unit, and may include a receiving unit and/or a sending unit, respectively configured to perform a receiving operation and a sending operation. The apparatus 700 may further include a storage unit 701, configured to store program code and/or data of the apparatus 700.

In an embodiment, the apparatus 700 may be the terminal device (or a chip disposed in the terminal device) in any one of the foregoing embodiments, for example, the first terminal device in Embodiment 1, the terminal device 1 in Embodiment 2, or the terminal device 1 in Embodiment 3. The processing unit 702 may support the apparatus 700 in performing actions of the terminal device in the foregoing method examples. Alternatively, the processing unit 702 mainly performs internal actions of the terminal device in the method examples, and the communication unit 703 may support communication between the apparatus 700 and another device (for example, the network device). Alternatively, the apparatus 700 may be the network device (or a chip disposed in the network device) in any one of the foregoing embodiments, for example, the network device 2 in Embodiment 2 or the network device 2 in Embodiment 3. The processing unit 702 may support the apparatus 700 in performing actions of the network device in the foregoing method examples. Alternatively, the processing unit 702 mainly performs internal actions of the network device in the method examples, and the communication unit 703 may support communication between the apparatus 700 and another device (for example, the terminal device).

For example, in this embodiment, the communication unit 703 is configured to obtain a data packet, and a first QoS parameter and a second QoS parameter that correspond to the data packet. The processing unit 702 is configured to: map the data packet to a DRB or an RLC layer entity based on the first QoS parameter and the second QoS parameter, and send the data packet to a second communication apparatus through the communication unit 703.

In a possible design, the first QoS parameter or information used to indicate the first QoS parameter is carried in the data packet.

In a possible design, the apparatus 700 is a terminal device, and the first QoS parameter is allocated to the data packet by an application layer of the apparatus 700.

In a possible design, the apparatus 700 is a network device. The communication unit 703 is specifically configured to receive a GTP-U data packet from a core network device, where the GTP-U data packet includes the data packet and indication information, and the indication information is used to indicate the first QoS parameter.

In a possible design, the communication unit 703 is further configured to obtain a correspondence between the first QoS parameter, the second QoS parameter, and a DRB. The processing unit 702 is specifically configured to map, based on the correspondence, the data packet to the DRB corresponding to the first QoS parameter and the second QoS parameter.

In a possible design, the apparatus 700 is a terminal device, and the communication unit 703 is specifically configured to obtain the correspondence from a network device, where the correspondence is carried in RRC signaling.

In a possible design, the apparatus 700 is a terminal device, and the processing unit 702 is further configured to: if determining that the correspondence does not exist, map the data packet to a default DRB.

In a possible design, the default DRB is configured by a network device, or is a DRB with a smallest or largest DRB ID in one or more DRBs associated with the second QoS parameter.

In a possible design, the apparatus 700 is a terminal device. The processing unit 702 is further configured to: if determining that the correspondence does not exist, send a first request message to the network device through the communication unit 703, where the first request message includes the first QoS parameter and the second QoS parameter.

In a possible design, the communication unit 703 is further configured to receive a first response message from the network device, where the first response message is used to indicate the DRB corresponding to the first QoS parameter and the second QoS parameter. The processing unit 702 is further configured to map, based on the first response message, the data packet to the DRB corresponding to the first QoS parameter and the second QoS parameter.

In a possible design, the first QoS parameter or the information used to indicate the first QoS parameter is carried in an SDAP header or a PDCP header of the data packet.

In a possible design, the processing unit 702 is specifically configured to: determine, based on the first QoS parameter, the second QoS parameter corresponding to the data packet, and map, based on a correspondence between the second QoS parameter and a DRB, the data packet to the DRB corresponding to the second QoS parameter.

In a possible design, the communication unit 703 is further configured to obtain a correspondence between the first QoS parameter and the second QoS parameter from the core network device.

In a possible design, the processing unit 702 is specifically configured to: map, based on the second QoS parameter, the data packet to the DRB corresponding to the second QoS parameter, where a packet data convergence protocol PDCP layer entity corresponding to the DRB is associated with at least one RLC layer entity; obtain a correspondence between the first QoS parameter and an RLC layer entity through the communication unit 703; and map, based on the correspondence, the data packet to the RLC layer entity that corresponds to the first QoS parameter and that is in the at least one RLC layer entity.

In a possible design, the apparatus 700 is a terminal device, and the communication unit 703 is further configured to obtain the correspondence from a network device, where the correspondence is carried in RRC signaling.

In a possible design, the apparatus 700 is a terminal device, and the processing unit 702 is further configured to: if determining that the correspondence does not exist, map the data packet to a default RLC layer entity.

In a possible design, the default RLC layer entity is configured by the network device, or is an RLC layer entity that corresponds to a smallest or largest logical channel LCH ID and that is in the at least one RLC layer entity.

In a possible design, the apparatus 700 is a terminal device. The processing unit 702 is further configured to: if determining that the correspondence does not exist, send a second request message to the network device through the communication unit 703, where the second request message includes the first QoS parameter.

In a possible design, the communication unit 703 is further configured to receive a second response message from the network device, where the second response message is used to indicate the RLC layer entity corresponding to the first QoS parameter. The processing unit 702 is further configured to map, based on the second response message, the data packet to the RLC layer entity corresponding to the first QoS parameter.

In a possible design, the PDCP layer entity is configured with a plurality of groups of parameters, and the first QoS parameter corresponds to one group of the plurality of groups of parameters. The processing unit 702 is further configured to process the data packet based on the group of parameters corresponding to the first QoS parameter.

In a possible design, the PDCP layer entity is associated with a plurality of RLC layer entities, the first QoS parameter corresponds to at least two of the plurality of RLC layer entities, and the at least two RLC layer entities are configured to implement a duplication transmission function. The communication unit 703 is further configured to receive indication information from the second communication apparatus, where the indication information is used to indicate an RLC layer entity that is configured to execute the duplication transmission function and that is in the at least two RLC layer entities corresponding to the first QoS parameter. The processing unit 702 is further configured to map the data packet to the RLC layer entity configured to execute the duplication transmission function.

In a possible design, the first QoS parameter or the information used to indicate the first QoS parameter is carried in an SDAP header, a PDCP header, or an RLC header of the data packet.

In another embodiment, the apparatus 700 may be the network device (or a chip disposed in the network device) in any one of the foregoing embodiments, for example, the network device 1 in Embodiment 2 or the network device 1 in Embodiment 3. The processing unit 702 may support the apparatus 700 in performing actions of the network device in the foregoing method examples. Alternatively, the processing unit 702 mainly performs internal actions of the network device in the method examples, and the communication unit 703 may support communication between the apparatus 700 and another device (for example, the core network device).

For example, in this embodiment, the communication unit 703 is configured to: obtain a data packet, and a first QoS parameter and a second QoS parameter that correspond to the data packet, and sends a GTP-U data packet to a core network device, where the GTP-U data packet includes the data packet and indication information, and the indication information is used to indicate the first QoS parameter and the second QoS parameter.

In a possible design, the communication unit 703 is specifically configured to receive the data packet from a terminal device, where the data packet is carried on a first DRB or a first RLC layer entity. The processing unit 702 is configured to: obtain the first QoS parameter based on the first DRB or the first RLC layer entity; or receive the data packet from the terminal device through the communication unit 703, where the data packet carries the first QoS parameter or information used to indicate the first QoS parameter.

In a possible design, that the data packet carries the first QoS parameter or information used to indicate the first QoS parameter includes: an SDAP header, a PDCP header, or an RLC header of the data packet carries the first QoS parameter or the information used to indicate the first QoS parameter.

In a possible design, the indication information is carried in a GTP-U header of the GTP-U data packet.

It should be understood that division of units in the apparatus is merely logical function division. During actual implementation, all or some of the units may be integrated into one physical entity or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware. For example, units may be separately disposed processing elements, or may be integrated into a chip of the apparatus for implementation. In addition, the units may be stored in a memory in a program form, and is invoked by a processing element of the apparatus to perform functions of the units. In addition, such units may be integrated together or may be individually implemented. The processing element herein may also be referred to as a processor, and may be an integrated circuit having a signal processing capability. In an implementation process, steps in the foregoing methods or the foregoing units may be implemented by using a hardware integrated logic circuit in the processor element, or may be implemented in a form in which the processing element invokes software.

In an example, a unit in any one of the foregoing apparatuses may be one or more integrated circuits configured to implement the foregoing method, for example, one or more application-specific integrated circuits (Application-Specific Integrated Circuits, ASICs), one or more microprocessors (digital signal processors, DSPs), or one or more field programmable gate arrays (Field Programmable Gate Arrays, FPGAs), or a combination of at least two of these integrated circuit forms. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated together and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

FIG. 8 is a schematic diagram of a structure of a terminal device according to an embodiment of this application. The terminal device may be the terminal device in the foregoing embodiments, and may be configured to implement operations of the terminal device in the foregoing embodiments. As shown in FIG. 8, the terminal device includes an antenna 810, a radio frequency part 820, and a signal processing part 830. The antenna 810 is connected to the radio frequency part 820. In a downlink direction, the radio frequency part 820 receives, through the antenna 810, information sent by a network device, and sends, to the signal processing part 830, the information sent by the network device for processing. In an uplink direction, the signal processing part 830 processes information from the terminal device, and sends the information to the radio frequency part 820. The radio frequency part 820 processes the information from the terminal device, and then sends the processed information to the network device through the antenna 810.

The signal processing part 830 may include a modem subsystem, configured to process data at each communication protocol layer. The signal processing part 830 may further include a central processing subsystem, configured to implement processing of an operating system and an application layer of the terminal device. In addition, the signal processing part 830 may further include another subsystem, for example, a multimedia subsystem or a peripheral subsystem. The multimedia subsystem is configured to control a camera or a screen display of the terminal device, and the peripheral subsystem is configured to implement a connection to another device. The modem subsystem may be a separately disposed chip.

The modem subsystem may include one or more processing elements 831, for example, include a main control CPU and another integrated circuit. In addition, the modem subsystem may further include a storage element 832 and an interface circuit 833. The storage element 832 is configured to store data and a program. However, the program used to perform the methods performed by the terminal device in the foregoing methods may not be stored in the storage element 832, but is stored in a memory outside the modem subsystem, and is loaded and used by the modem subsystem when to be used. The interface circuit 833 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the methods performed by the terminal device in the foregoing method embodiments. The storage element may be a storage element whose processing element is located on a same chip, that is, an on-chip storage element.

In another implementation, the program used to perform the methods performed by the terminal device in the foregoing methods may be in a storage element located on a different chip from the processing element, that is, an off-chip storage element. In this case, the processing element invokes or loads the program from the off-chip storage element to the on-chip storage element, to invoke and perform the method performed by the terminal device in the foregoing method embodiments.

In still another implementation, units of the terminal device that implement the steps in the foregoing methods may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. The integrated circuits may be integrated together to form a chip.

Units of the terminal device that implement the steps in the foregoing methods may be integrated together, and implemented in a form of SOC. The SOC chip is configured to implement the foregoing methods. At least one processing element and a storage element may be integrated into the chip, and the processing element invokes a program device stored in the storage element to implement the foregoing methods performed by the terminal device. Alternatively, at least one integrated circuit may be integrated into the chip, to implement the foregoing methods performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logical circuit in the processing element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 7. For example, the processing element may be a general-purpose processor, for example, a CPU, or may be one or more integrated circuits configured to implement the foregoing methods, for example, one or more ASICs, one or more microprocessors DSPs, or one or more FPGAs, or a combination of at least two of the integrated circuit forms. The storage element may be implemented by using a memory, and a function of the storage element may be the same as a function of the storage unit described in FIG. 7. The storage element may be a memory, or may be a general name of a plurality of memories.

The terminal device shown in FIG. 8 can implement processes related to the terminal device in the method embodiments shown in FIG. 3, FIG. 5a, or FIG. 6a. Operations and/or functions of modules in the terminal device shown in FIG. 8 are respectively intended to implement corresponding procedures in the foregoing method embodiments. For details, refer to the descriptions in the foregoing method embodiments. To avoid repetition, detailed descriptions are properly omitted herein.

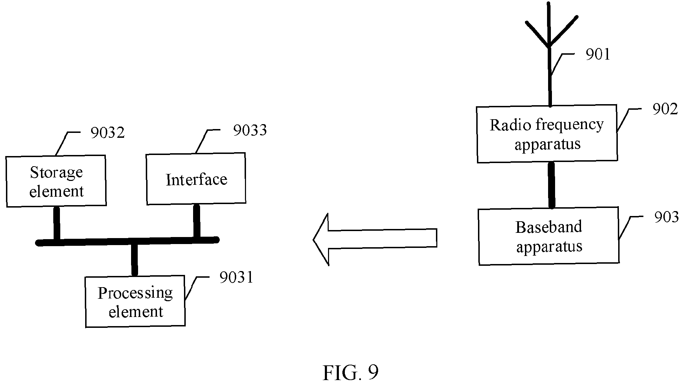

FIG. 9 is a schematic diagram of a structure of a network device according to an embodiment of this application. The network device is configured to implement operations of the network device in the foregoing embodiments. As shown in FIG. 9, the network device includes an antenna 901, a radio frequency apparatus 902, and a baseband apparatus 903. The antenna 901 is connected to the radio frequency apparatus 902. In an uplink direction, the radio frequency apparatus 902 receives, through the antenna 901, information sent by a terminal device, and sends, to the baseband apparatus 903, the information sent by the terminal device for processing. In a downlink direction, the baseband apparatus 903 processes information from the terminal device, and sends the information to the radio frequency apparatus 902. The radio frequency apparatus 902 processes the information from the terminal device, and then sends the processed information to the terminal device through the antenna 901.

The baseband apparatus 903 may include one or more processing elements 9031, for example, include a main control CPU and another integrated circuit. In addition, the baseband apparatus 903 may further include a storage element 9032 and an interface 9033. The storage element 9032 is configured to store a program and data. The interface 9033 is configured to exchange information with the radio frequency apparatus 902, and the interface is, for example, a common public radio interface (common public radio interface, CPRI). The foregoing apparatus used for the network device may be located in the baseband apparatus 903. For example, the foregoing apparatus used for the network device may be a chip in the baseband apparatus 903. The chip includes at least one processing element and an interface circuit. The processing element is configured to perform the steps of any method performed by the network device. The interface circuit is configured to communicate with another apparatus. In an implementation, units of the network device that implement the steps in the foregoing methods may be implemented by a program scheduled by a processing element. For example, the apparatus used for the network device includes a processing element and a storage element. The processing element invokes a program stored in the storage element, to perform the methods performed by the network device in the foregoing method embodiments. The storage element may be a storage element that is located on a same chip as the processing element, that is, an on-chip storage element, or may be a storage element that is located on a different chip from the processing element, that is, an off-chip storage element.

In another implementation, units of the network device that implement the steps in the foregoing methods may be configured as one or more processing elements. The processing elements are disposed in the baseband apparatus. The processing element herein may be an integrated circuit, for example, one or more ASICs, one or more DSPs, one or more FPGAs, or a combination of the types of integrated circuits. The integrated circuits may be integrated together to form a chip.

Units of the network device that implement the steps in the foregoing methods may be integrated together, and implemented in a form of a system-on-a-chip (system-on-a-chip, SOC). For example, the baseband apparatus includes the SOC chip, configured to implement the foregoing methods. At least one processing element and a storage element may be integrated into the chip, and the processing element invokes a program stored in the storage element to implement the foregoing methods performed by the network device. Alternatively, at least one integrated circuit may be integrated into the chip, to implement the foregoing methods performed by the network device. Alternatively, with reference to the foregoing implementations, functions of some units may be implemented by a program invoked by the processing element, and functions of some units are implemented by the integrated circuit.

It can be learned that the foregoing apparatus used for the network device may include at least one processing element and an interface circuit. The at least one processing element is configured to perform any method performed by the network device provided in the foregoing method embodiments. The processing element may perform some or all steps performed by the network device, in a first manner, to be specific, by invoking the program stored in the storage element; or may perform some or all steps performed by the network device, in a second manner, to be specific, by using a hardware integrated logical circuit in the processing element in combination with instructions; or may certainly perform, by combining the first manner and the second manner, some or all steps performed by the network device.

The processing element herein is the same as that described above, and may be implemented by using a processor. A function of the processing element may be the same as a function of the processing unit described in FIG. 7. For example, the processing element may be a general-purpose processor, for example, a CPU, or may be one or more integrated circuits configured to implement the foregoing methods, for example, one or more ASICs, one or more microprocessors DSPs, or one or more FPGAs, or a combination of at least two of the integrated circuit forms. The storage element may be implemented by using a memory, and a function of the storage element may be the same as a function of the storage unit described in FIG. 7. The storage element may be a memory, or may be a general name of a plurality of memories.

The network device shown in FIG. 9 can implement processes related to the network device in the method embodiments shown in FIG. 5a or FIG. 6a. Operations and/or functions of modules in the network device shown in FIG. 9 are respectively intended to implement corresponding procedures in the foregoing method embodiments. For details, refer to the descriptions in the foregoing method embodiments. To avoid repetition, detailed descriptions are properly omitted herein.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a special-purpose computer, an embedded processor, or a processor of another programmable data processing device to generate a machine, so that the instructions executed by the computer or the processor of another programmable data processing device generate an apparatus for implementing a specific function in one or more processes in the flowcharts and/or in one or more blocks in the block diagrams.

The computer program instructions may be stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

The computer program instructions may be loaded onto the computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover the modifications and variations of this application provided that they fall within the scope of the following claims and equivalent technologies of this application.

## Claims

1. A data transmission method, wherein the method comprises:
obtaining, by a first communication apparatus, a data packet, and a first quality of service QoS parameter and a second QoS parameter that correspond to the data packet; and
mapping, by the first communication apparatus, the data packet to a data radio bearer DRB or a radio link control RLC layer entity based on the first QoS parameter and the second QoS parameter, and sending the data packet to a second communication apparatus.

2. The method according to claim 1, wherein the first QoS parameter or information used to indicate the first QoS parameter is carried in the data packet.

3. The method according to claim 1 or 2, wherein the first communication apparatus is a terminal device, and the first QoS parameter is allocated to the data packet by an application layer of the first communication apparatus.

4. The method according to claim 1 or 2, wherein the first communication apparatus is a network device, and
the obtaining, by a first communication apparatus, a data packet and a first QoS parameter corresponding to the data packet comprises:
receiving, by the first communication apparatus, a GTP-U data packet from a core network device, wherein the GTP-U data packet comprises the data packet and indication information, and the indication information is used to indicate the first QoS parameter.

5. The method according to any one of claims 1 or 2, wherein the mapping, by the first communication apparatus, the data packet to a DRB based on the first QoS parameter and the second QoS parameter comprises:
obtaining, by the first communication apparatus, a correspondence between the first QoS parameter, the second QoS parameter, and a DRB; and
mapping, by the first communication apparatus based on the correspondence, the data packet to the DRB corresponding to the first QoS parameter and the second QoS parameter.

6. The method according to claim 5, wherein the first communication apparatus is a terminal device, and the obtaining, by the first communication apparatus, a correspondence comprises:
obtaining, by the first communication apparatus, the correspondence from a network device, wherein the correspondence is carried in RRC signaling.

7. The method according to claim 5, wherein the first communication apparatus is a terminal device, and the method further comprises:
if determining that the correspondence does not exist, mapping, by the first communication apparatus, the data packet to a default DRB.

8. The method according to claim 7, wherein the default DRB is configured by a network device, or is a DRB with a smallest or largest DRB ID in one or more DRBs associated with the second QoS parameter.

9. The method according to any one of claims 5 to 8, wherein the first communication apparatus is a terminal device, and the method further comprises:
if determining that the correspondence does not exist, sending, by the first communication apparatus, a first request message to the network device, wherein the first request message comprises the first QoS parameter and the second QoS parameter.

10. The method according to claim 9, wherein the method further comprises: receiving, by the first communication apparatus, a first response message from the network device, wherein the first response message is used to indicate the DRB corresponding to the first QoS parameter and the second QoS parameter; and
the mapping, by the first communication apparatus, the data packet to a DRB based on the first QoS parameter and the second QoS parameter comprises: mapping, by the first communication apparatus based on the first response message, the data packet to the DRB corresponding to the first QoS parameter and the second QoS parameter.

11. The method according to any one of claims 5 to 10, wherein the first QoS parameter or the information used to indicate the first QoS parameter is carried in an SDAP header or a PDCP header of the data packet.

12. The method according to any one of claims 1 to 4, wherein the mapping, by the first communication apparatus, the data packet to a DRB based on the first QoS parameter and the second QoS parameter comprises:
determining, by the first communication apparatus based on the first QoS parameter, the second QoS parameter corresponding to the data packet; and
mapping, by the first communication apparatus based on a correspondence between the second QoS parameter and a DRB, the data packet to the DRB corresponding to the second QoS parameter.

13. The method according to claim 12, wherein the method further comprises:
obtaining, by the first communication apparatus, a correspondence between the first QoS parameter and the second QoS parameter from the core network device.

14. The method according to any one of claims 1 or 2, wherein the mapping, by the first communication apparatus, the data packet to an RLC layer entity based on the first QoS parameter and the second QoS parameter comprises:
mapping, by the first communication apparatus based on the second QoS parameter, the data packet to the DRB corresponding to the second QoS parameter, wherein a packet data convergence protocol PDCP layer entity corresponding to the DRB is associated with at least one RLC layer entity; and
obtaining, by the first communication apparatus, a correspondence between the first QoS parameter and an RLC layer entity, and mapping, based on the correspondence, the data packet to the RLC layer entity that corresponds to the first QoS parameter and that is in the at least one RLC layer entity.

15. The method according to claim 14, wherein the first communication apparatus is a terminal device, and the obtaining, by the first communication apparatus, a correspondence between the first QoS parameter and an RLC layer entity comprises:
obtaining, by the first communication apparatus, the correspondence from a network device, wherein the correspondence is carried in RRC signaling.

16. The method according to claim 15, wherein the first communication apparatus is a terminal device, and the method further comprises:
if determining that the correspondence does not exist, mapping, by the first communication apparatus, the data packet to a default RLC layer entity.

17. The method according to claim 16, wherein the default RLC layer entity is configured by the network device, or is an RLC layer entity that corresponds to a smallest or largest logical channel LCH ID and that is in the at least one RLC layer entity.

18. The method according to any one of claims 14 to 17, wherein the first communication apparatus is a terminal device, and the method further comprises:
if determining that the correspondence does not exist, sending, by the first communication apparatus, a second request message to the network device, wherein the second request message comprises the first QoS parameter.

19. The method according to claim 18, wherein the method further comprises: receiving, by the first communication apparatus, a second response message from the network device, wherein the second response message is used to indicate the RLC layer entity corresponding to the first QoS parameter; and
mapping, by the first communication apparatus based on the second response message, the data packet to the RLC layer entity corresponding to the first QoS parameter.

20. The method according to any one of claims 14 to 19, wherein the PDCP layer entity is configured with a plurality of groups of parameters, and the first QoS parameter corresponds to one group of the plurality of groups of parameters; and
the method further comprises: processing, by the first communication apparatus, the data packet based on the group of parameters corresponding to the first QoS parameter.

21. The method according to any one of claims 14 to 20, wherein the PDCP layer entity is associated with a plurality of RLC layer entities, the first QoS parameter corresponds to at least two of the plurality of RLC layer entities, and the at least two RLC layer entities are configured to implement a duplication transmission function; and
the mapping, by the first communication apparatus, the data packet to an RLC layer entity based on the first QoS parameter and the second QoS parameter comprises:
receiving, by the first communication apparatus, indication information from the second communication apparatus, wherein the indication information is used to indicate an RLC layer entity that is configured to execute the duplication transmission function and that is in the at least two RLC layer entities corresponding to the first QoS parameter; and
mapping, by the first communication apparatus, the data packet to the RLC layer entity configured to execute the duplication transmission function.

22. The method according to any one of claims 14 to 21, wherein the first QoS parameter or the information used to indicate the first QoS parameter is carried in an SDAP header, a PDCP header, or an RLC header of the data packet.

23. A data transmission method, wherein the method comprises:
obtaining a data packet, and a first QoS parameter and a second QoS parameter that correspond to the data packet; and
sending a GTP-U data packet to a core network device, wherein the GTP-U data packet comprises the data packet and indication information, and the indication information is used to indicate the first QoS parameter and the second QoS parameter.

24. The method according to claim 23, wherein the obtaining a data packet, and a first QoS parameter and a second QoS parameter that correspond to the data packet comprises:
receiving the data packet from a terminal device, wherein the data packet is carried on a first DRB or a first RLC layer entity, and obtaining the first QoS parameter based on the first DRB or the first RLC layer entity; or
receiving the data packet from a terminal device, wherein the data packet carries the first QoS parameter or information used to indicate the first QoS parameter.

25. The method according to claim 24, wherein that the data packet carries the first QoS parameter or information used to indicate the first QoS parameter comprises: an SDAP header, a PDCP header, or an RLC header of the data packet carries the first QoS parameter or the information used to indicate the first QoS parameter.

26. The method according to any one of claims 23 to 25, wherein the indication information is carried in a GTP-U header of the GTP-U data packet.

27. A communication system, wherein the communication system comprises a network device and a core network device, wherein
the network device is configured to: obtain a data packet, and a first QoS parameter and a second QoS parameter that correspond to the data packet, and send a GTP-U data packet to the core network device, wherein the GTP-U data packet comprises the data packet and indication information, and the indication information is used to indicate the first QoS parameter and the second QoS parameter; and
the core network device is configured to receive the GTP-U data packet.

28. The communication system according to claim 27, wherein the communication system further comprises a terminal device, wherein
the terminal device is configured to send the data packet to the network device, wherein the data packet is carried on a first DRB or a first RLC layer entity, and the first DRB or the first RLC layer entity corresponds to the first QoS parameter; or the data packet carries the first QoS parameter or information used to indicate the first QoS parameter.

29. The communication system according to claim 27 or 28, wherein the core network device is further configured to send an internet protocol IP data packet, wherein the IP data packet comprises the data packet and the indication information.

30. An apparatus, comprising units configured to perform steps of the method according to any one of claims 1 to 26.

31. An apparatus, comprising at least one processor and an interface circuit, wherein the at least one processor is configured to: communicate with another apparatus via the interface circuit, and perform the method according to any one of claims 1 to 26.

32. An apparatus, comprising a processor, configured to invoke a program stored in a memory, to perform the method according to any one of claims 1 to 26.

33. A computer-readable storage medium, comprising a program, wherein when the program is run by a processor, the method according to any one of claims 1 to 26 is performed.
